# EUROPEAN PATENT APPLICATION

(11) **EP 4 366 360 A1**
(43) Date of publication of application: **08.05.2024**
(21) Application number: 22831832.5
(22) Date of filing: 23.06.2022
(51) Int. Cl.: H04W 24/02, H04W 72/04, H04W 76/28

(54) **INFORMATION TRANSMISSION METHOD, RESOURCE SCHEDULING METHOD AND APPARATUS, TERMINAL, AND NETWORK-SIDE DEVICE**

(30) Priority: 02.07.2021 CN 202110751445; 23.07.2021 CN 202110839495
(71) Applicant: Datang Mobile Communications Equipment Co., Ltd., Beijing 100085 (CN)
(72) Inventor: ZHAO, Yali, Beijing 100085 (CN)
(74) Representative: Maiwald GmbH
(86) International application number: PCT/CN2022/100738
(87) International publication number: WO 2023/274016

(57) **Abstract**

An information transmission method and apparatus, a resource scheduling method and apparatus, a terminal and a network side device are provided. The method includes sending indication information to the network side device by the terminal, the indication information is used to indicate a usage condition of SL DRX and/or SL DTX of the terminal.

## Description

### CROSS-REFERENCE TO RELATED APPLICATION

This application claims the priority of Chinese Patent Application No. No. 202110751445.3, filed in China on July 2, 2021, and the priority of Chinese Patent Application No. No. 202110839495.7 filed in China on July 23, 2021, the disclosures of which are incorporated herein by reference in their entireties.

### TECHNICAL FIELD

The present disclosure relates to the technical field of communications, and in particular, to an information transmission method, a resource scheduling method, an information transmission apparatus, a resource scheduling apparatus, a terminal, and a network side device.

### BACKGROUND

In the related art, whether to use a sidelink link (Sidelink, SL) discontinuous reception (Discontinuous Reception, DRX) and/or discontinuous transmission (Discontinuous Transmission, DTX) mechanism for multicast and broadcast of the sidelink depends on a sending terminal. For example, if the sending terminal determines that currently to-be-sent data is for a terminal supporting both a version 17 (Release-17, Rel-17) and a version 16 (Release-16, Rel-16), SL DRX may not be used; and if the sending terminal determines that the currently to-be-sent data is only for the terminal supporting the Rel -17, SL DRX may be used.

Since whether SL DRX/DTX is used completely depends on the sending terminal and is not known by the network side device, the network side device cannot accurately determine DRX and/or DTX activation time (Active Time) in the sidelink interface for a terminal in a Radio Resource Control (RRC) connected state and a sidelink-interface sending terminal using a resource allocation mode (Mode 1) scheduled by the network. Thus, a resource of the sidelink interface cannot be reasonably scheduled, causing a resource utilization rate of the sidelink interface to be reduced.

### SUMMARY

An objective of the present disclosure is to provide an information transmission method, an information transmission apparatus, a resource scheduling method, a resource scheduling apparatus, a terminal, and a network side device, for solving the problem that a network side device cannot reasonably schedule a sidelink interface resource due to the fact that the network side device cannot accurately determine the DRX activation time and/or the DTX activation time of the sidelink interface of the terminal.

In order to achieve the above objective, the embodiments of the present disclosure provide an information transmission method, the method includes:
sending indication information to a network side device by a terminal, wherein the indication information is used to indicate a usage condition of a SideLink Discontinuous Reception (SL DRX) and/or SideLink Discontinuous Transmission (SL DTX) of the terminal.

Contents of the indication information includes one of following:
whether SL DRX and/or SL DTX is applied at a sidelink interface for the terminal;
whether SL DRX and/or SL DTX is applied for each sidelink destination of the terminal;
whether SL DRX and/or SL DTX is applied for each Quality of Service (QoS) profile corresponding to each QoS of the terminal;
whether SL DRX and/or SL DTX is applied to each QoS profile list of a sidelink interface of the terminal;
whether SL DRX and/or SL DTX is applied to each QoS profile of each sidelink destination of the terminal;
whether SL DRX and/or SL DTX is applied to each QoS profile list of each sidelink destination of the terminal;
a sidelink destination list using SL DRX and/or SL DTX of the terminal;
a sidelink destination list not using SL DRX and/or SL DTX of the terminal;
a sidelink interface QoS profile using SL DRX and/or SL DTX of the terminal;
a sidelink interface QoS profile list using SL DRX and/or SL DTX of the terminal;
a sidelink interface QoS profile not using SL DRX and/or SL DTX of the terminal;
a sidelink interface QoS profile list not using SL DRX and/or SL DTX of the terminal;
a QoS profile list using SL DRX and/or SL DTX under each sidelink destination of the terminal;
a QoS profile list not using SL DRX and/or SL DTX under each sidelink destination of the terminal.

The indication information is determined by the terminal according to a transmission profile (Tx profile) configured by a higher layer of the terminal.

Contents of the Tx profile includes one of following:
mapping between a protocol release and a service type of a sidelink interface of the terminal;
mapping between a protocol release and a service of a sidelink interface of the terminal;
a protocol release used when the terminal sends data at a sidelink interface;
mapping between a protocol release and each sidelink destination of the terminal;
mapping between a protocol release and each QoS profile of a sidelink interface of the terminal;
mapping between a protocol release and each QoS profile list of a sidelink interface of the terminal;
mapping between a protocol release and each QoS profile under each sidelink destination of the terminal;
mapping between a protocol release and each QoS profile list under each sidelink destination of the terminal.

Each QoS profile of the sidelink interface of the terminal is identified by one of following identification manners:
using a Proximity-based Service Quality of Service Identifier (PQI) corresponding to the QoS profile as an identifier of the QoS profile;
when the terminal configures SL DRX and/or SL DTX for the QoS profile according to a System Information Block (SIB), determining a position of the QoS profile appearing in the SIB as an index of the QoS profile, using the index as an identifier of the QoS profile;
receiving a SIB or a dedicated signaling from a network side device by the terminal, and using, as an identifier of the QoS profile, an index of the QoS profile indicated in the SIB or the dedicated signaling.

The indication information is carried in any one of following:
a SidelinkUEInformation message;
a Radio Resource Control (RRC) signaling;
a Media Access Control Control Element (MAC CE).

A condition that triggers the terminal to send the indication information to the network side device includes one of following:
the indication information is carried in a SidelinkUEinformation message, and the terminal satisfies a condition of transmitting the SidelinkUEinformation message;
a Transmission (Tx) profile configured by a higher layer is received, and the indication information is generated by the terminal according to the Tx profile;
a newly arriving Quality of Service (QoS) flow belongs to a new QoS profile;
a newly arriving QoS flow belongs to a new QoS profile list;
data transmission of a QoS flow belonging to a first QoS profile ends, wherein the first QoS profile is one of all QoS profiles under a first destination of a sidelink interface of the terminal, and the first destination is one of all sidelink destinations of the terminal;
data transmissions of all QoS flows belonging to a first QoS profile list end, wherein the first QoS profile list is one of all QoS profile lists under a second destination of a sidelink interface of the terminal, and the second destination is one of all sidelink destinations of the terminal;
a state of whether a second QoS profile uses SL DRX and/or SL DTX changes, wherein the second QoS profile is one of all QoS profiles under a third destination of a sidelink interface of the terminal, and the third destination is one of all sidelink destinations of the terminal;
a state of whether a second QoS profile list uses SL DRX and/or SL DTX changes, wherein the second QoS profile list is one of all QoS profile lists under a fourth destination of a sidelink interface of the terminal, and the fourth destination is one of all sidelink destinations of the terminal;
implementation based on the terminal.

In order to achieve the above objective, some embodiments of the present disclosure further provide a resource scheduling method. The method includes:
receiving indication information from a terminal by a network side device;
performing scheduling of a sidelink interface of the terminal according to the indication information by the network side device.

Contents of the indication information includes one of following:
whether SL DRX and/or SL DTX is applied at a sidelink interface for the terminal;
whether SL DRX and/or SL DTX is applied for each sidelink destination of the terminal;
whether SL DRX and/or SL DTX is applied for each Quality of Service (QoS) profile corresponding to each QoS of the terminal;
whether SL DRX and/or SL DTX is applied to each QoS profile list of a sidelink interface of the terminal;
whether SL DRX and/or SL DTX is applied to each QoS profile of each sidelink destination of the terminal;
whether SL DRX and/or SL DTX is applied to each QoS profile list of each sidelink destination of the terminal;
a sidelink destination list using SL DRX and/or SL DTX of the terminal;
a sidelink destination list not using SL DRX and/or SL DTX of the terminal;
a sidelink interface QoS profile using SL DRX and/or SL DTX of the terminal;
a sidelink interface QoS profile list using SL DRX and/or SL DTX of the terminal;
a sidelink interface QoS profile not using SL DRX and/or SL DTX of the terminal;
a sidelink interface QoS profile list not using SL DRX and/or SL DTX of the terminal;
a QoS profile list using SL DRX and/or SL DTX under each sidelink destination of the terminal;
a QoS profile list not using SL DRX and/or SL DTX under each sidelink destination of the terminal.

Performing scheduling of the sidelink interface of the terminal according to the indication information by the network side device includes:
if it is determined, according to the indication information, that the terminal uses SL DRX and/or SL DTX at a sidelink interface, determining an SL DRX configuration and/or an SL DTX configuration corresponding to each QoS profile or each QoS profile list under each destination of the terminal;
determining, according to the SL DRX configuration and the SL DTX configuration, SL DRX activation time and/or SL DTX activation time corresponding to each QoS profile or each QoS profile list under each destination of the terminal;
scheduling a sidelink interface logical channel belonging to each QoS profile or each QoS profile list under each destination according to the SL DRX activation time and/or the SL DTX activation time corresponding to the QoS profile or the QoS profile list.

Performing scheduling of the sidelink interface of the terminal according to the indication information by the network side device includes:
if it is determined, according to the indication information, that at least part of sidelink destinations of the terminal uses SL DRX and/or SL DTX, or it is determined, according to the indication information, that a sidelink destination list uses SL DRX and/or SL DTX of the terminal, determining an SL DRX configuration and/or an SL DTX configuration corresponding to each QoS profile or each QoS profile list using SL DRX and/or SL DTX under each destination of the terminal;
determining, according to the SL DRX configuration and/or the SL DTX configuration, SL DRX activation time and/or SL DTX activation time corresponding to each QoS profile or each QoS profile list under each destination using SL DRX and/or SL DTX of the terminal;
scheduling, according to the SL DRX activation time and/or the SL DTX activation time corresponding to each QoS profile or each QoS profile list under each destination using SL DRX and/or SL DTX of the terminal, a sidelink interface logical channel belonging to the QoS profile or the QoS profile list.

Performing scheduling of the sidelink interface of the terminal according to the indication information by the network side device includes:
if it is determined, according to the indication information, that at least part of QoS profiles or QoS profile lists of the sidelink interface of the terminal uses SL DRX and/or SL DTX, or it is determined, according to the indication information, that a sidelink interface QoS profile or a QoS profile list uses SL DRX and/or SL DTX of the terminal, determining an SL DRX configuration and/or an SL DTX configuration corresponding to each QoS profile or each QoS profile list using SL DRX and/or SL DTX under each destination of the terminal;
determining, according to the SL DRX configuration and/or the SL DTX configuration, SL DRX activation time and/or SL DTX activation time corresponding to each QoS profile or each QoS profile list using SL DRX and/or SL DTX under each destination of the terminal;
scheduling, according to the SL DRX activation time and/or the SL DTX activation time corresponding to each QoS profile or each QoS profile list using SL DRX and/or SL DTX under each destination of the terminal, a sidelink interface logical channel belonging to the QoS profile or the QoS profile list.

Performing scheduling of the sidelink interface of the terminal according to the indication information by the network side device includes:
if it is determined, according to the indication information, that part of QoS profiles or QoS profile lists under at least a part of sidelink destinations of the terminal uses SL DRX and/or SL DTX, or a QoS profile list using SL DRX and/or SL DTX under each sidelink destination of the terminal is determined according to the indication information, determining an SL DRX configuration and/or an SL DTX configuration corresponding to the QoS profile or the QoS profile list under the destination using SL DRX and/or SL DTX of the terminal;
according to the SL DRX configuration and/or the SL DTX configuration, determining SL DRX activation time and/or SL DTX activation time corresponding to the QoS profile or the QoS profile list under the destination using SL DRX and/or SL DTX of the terminal;
scheduling, according to the SL DRX activation time and/or the SL DTX activation time corresponding to the QoS profile or the QoS profile list under the destination using SL DRX and/or SL DTX of the terminal, sidelink interface logical channels belonging to the QoS profile or the QoS profile list.

Performing scheduling of the sidelink interface of the terminal according to the indication information by the network side device includes:
if it is determined, according to the indication information, that SL DRX and/or SL DTX is not applied at the sidelink interface of the terminal, scheduling any sidelink interface logical channel belonging to the terminal by using all available resources of the sidelink interface;
if it is determined, according to the indication information, that SL DRX and/or SL DTX is not applied to at least part of the sidelink destinations of the terminal, or a sidelink destination list not using SL DRX and/or SL DTX is determined for the terminal according to the indication information, scheduling a sidelink interface logical channel under each destination not using SL DRX and/or SL DTX and belonging to the terminal, by using all available resources of the sidelink interface;
if it is determined, according to the indication information, that SL DRX and/or SL DTX is not applied to at least part of QoS profiles or QoS profile lists of the sidelink interface of the terminal, or it is determined, according to the indication information, that SL DRX and/or SL DTX is not applied to part of QoS profiles or QoS profile lists under the at least part of sidelink destinations of the terminal, then scheduling, by using all available resources of the sidelink interface, a sidelink interface logical channel belonging to the QoS profile or the QoS profile list under a destination not using SL DRX and/or SL DTX of the terminal;
if a sidelink interface QoS profile not using SL DRX and/or SL DTX is determined according to the indication information, scheduling a sidelink interface logical channel belonging to the QoS profile not using SL DRX and/or SL DTX under each destination of the terminal, by using all available resources of the sidelink interface;
if a sidelink interface QoS profile list that does not use SL DRX and/or SL DTX is determined according to the indication information, or a QoS profile list not using SL DRX and/or SL DTX under each sidelink destination of the terminal is determined according to the indication information, scheduling, by using all available resources of the sidelink interface, a sidelink interface logical channel belonging to a QoS profile list not using SL DRX and/or SL DTX under each destination of the terminal.

In order to achieve the above objective, the embodiments of the present disclosure further provide a terminal. The terminal includesa memory, a transceiver, and a processor, wherein the memory is configured to store a program instruction; the transceiver is configured to send and receive data under control of the processor; and the processor is configured to read the program instruction in the memory and execute following operations:
sending indication information to a network side device through the transceiver, wherein the indication information is used to indicate a usage condition of a SideLink Discontinuous Reception (SL DRX) and/or SideLink Discontinuous Transmission (SL DTX) of the terminal.

Contents of the indication information includes one of following:
whether SL DRX and/or SL DTX is applied at a sidelink interface for the terminal;
whether SL DRX and/or SL DTX is applied for each sidelink destination of the terminal;
whether SL DRX and/or SL DTX is applied for each Quality of Service (QoS) profile corresponding to each QoS of the terminal;
whether SL DRX and/or SL DTX is applied to each QoS profile list of a sidelink interface of the terminal;
whether SL DRX and/or SL DTX is applied to each QoS profile of each sidelink destination of the terminal;
whether SL DRX and/or SL DTX is applied to each QoS profile list of each sidelink destination of the terminal;
a sidelink destination list using SL DRX and/or SL DTX of the terminal;
a sidelink destination list not using SL DRX and/or SL DTX of the terminal;
a sidelink interface QoS profile using SL DRX and/or SL DTX of the terminal;
a sidelink interface QoS profile list using SL DRX and/or SL DTX of the terminal;
a sidelink interface QoS profile not using SL DRX and/or SL DTX of the terminal;
a sidelink interface QoS profile list not using SL DRX and/or SL DTX of the terminal;
a QoS profile list using SL DRX and/or SL DTX under each sidelink destination of the terminal;
a QoS profile list not using SL DRX and/or SL DTX under each sidelink destination of the terminal.

The indication information is determined by the terminal according to a transmission profile (Tx profile) configured by a higher layer of the terminal.

Contents of the Tx profile includes one of following:
mapping between a protocol release and a service type of a sidelink interface of the terminal;
mapping between a protocol release and a service of a sidelink interface of the terminal;
a protocol release used when the terminal sends data at a sidelink interface;
mapping between a protocol release and each sidelink destination of the terminal;
mapping between a protocol release and each QoS profile of a sidelink interface of the terminal;
mapping between a protocol release and each QoS profile list of a sidelink interface of the terminal;
mapping between a protocol release and each QoS profile under each sidelink destination of the terminal;
mapping between a protocol release and each QoS profile list under each sidelink destination of the terminal.

Each QoS profile of the sidelink interface of the terminal is identified by one of following identification manners:
using a Proximity-based Service Quality of Service Identifier (PQI) corresponding to the QoS profile as an identifier of the QoS profile;
when the terminal configures SL DRX and/or SL DTX for the QoS profile according to a System Information Block (SIB), determining a position of the QoS profile appearing in the SIB as an index of the QoS profile, using the index as an identifier of the QoS profile;
receiving a SIB or a dedicated signaling from a network side device by the terminal, and using, as an identifier of the QoS profile, an index of the QoS profile indicated in the SIB or the dedicated signaling.

The indication information is carried in any one of following:
a SidelinkUEInformation message;
a Radio Resource Control (RRC) signaling;
a Media Access Control Control Element (MAC CE).

A condition that triggers the terminal to send the indication information to the network side device includes one of following:
the indication information is carried in a SidelinkUEinformation message, and the terminal satisfies a condition of transmitting the SidelinkUEinformation message;
a Transmission (Tx) profile configured by a higher layer is received, and the indication information is generated by the terminal according to the Tx profile;
a newly arriving Quality of Service (QoS) flow belongs to a new QoS profile;
a newly arriving QoS flow belongs to a new QoS profile list;
data transmission of a QoS flow belonging to a first QoS profile ends, wherein the first QoS profile is one of all QoS profiles under a first destination of a sidelink interface of the terminal, and the first destination is one of all sidelink destinations of the terminal;
data transmissions of all QoS flows belonging to a first QoS profile list end, wherein the first QoS profile list is one of all QoS profile lists under a second destination of a sidelink interface of the terminal, and the second destination is one of all sidelink destinations of the terminal;
a state of whether a second QoS profile uses SL DRX and/or SL DTX changes, wherein the second QoS profile is one of all QoS profiles under a third destination of a sidelink interface of the terminal, and the third destination is one of all sidelink destinations of the terminal;
a state of whether a second QoS profile list uses SL DRX and/or SL DTX changes, wherein the second QoS profile list is one of all QoS profile lists under a fourth destination of a sidelink interface of the terminal, and the fourth destination is one of all sidelink destinations of the terminal;
implementation based on the terminal.

In order to achieve the above objective, the embodiments of the present disclosure further provide an information transmission apparatus. The apparatus includes:
a sending unit, used to send indication information to a network side device by a terminal, wherein the indication information is used to indicate a usage condition of a SideLink Discontinuous Reception (SL DRX) and/or SideLink Discontinuous Transmission (SL DTX) of the terminal.

In order to achieve the above objective, the embodiments of the present disclosure further provide a processor-readable storage medium, wherein the processor-readable storage medium stores a program, the program is configured to cause a processor to execute steps of the information transmission method described above.

In order to achieve the above objective, the embodiments of the present disclosure further provide a network side device. The network side device includes a memory, a transceiver, and a processor, wherein the memory is configured to store a program; the transceiver is configured to send and receive data under control of the processor; the processor is configured to read the program in the memory and execute following operations:
receiving indication information from a terminal through the transceiver;
performing scheduling of a sidelink interface of the terminal according to the indication information by a network side device.

Contents of the indication information includes one of following:
whether SL DRX and/or SL DTX is applied at a sidelink interface for the terminal;
whether SL DRX and/or SL DTX is applied for each sidelink destination of the terminal;
whether SL DRX and/or SL DTX is applied for each Quality of Service (QoS) profile corresponding to each QoS of the terminal;
whether SL DRX and/or SL DTX is applied to each QoS profile list of a sidelink interface of the terminal;
whether SL DRX and/or SL DTX is applied to each QoS profile of each sidelink destination of the terminal;
whether SL DRX and/or SL DTX is applied to each QoS profile list of each sidelink destination of the terminal;
a sidelink destination list using SL DRX and/or SL DTX of the terminal;
a sidelink destination list not using SL DRX and/or SL DTX of the terminal;
a sidelink interface QoS profile using SL DRX and/or SL DTX of the terminal;
a sidelink interface QoS profile list using SL DRX and/or SL DTX of the terminal;
a sidelink interface QoS profile not using SL DRX and/or SL DTX of the terminal;
a sidelink interface QoS profile list not using SL DRX and/or SL DTX of the terminal;
a QoS profile list using SL DRX and/or SL DTX under each sidelink destination of the terminal;
a QoS profile list not using SL DRX and/or SL DTX under each sidelink destination of the terminal.

The processor is configured to read the program in the memory and perform following operations:
if it is determined, according to the indication information, that the terminal uses SL DRX and/or SL DTX at a sidelink interface, determining an SL DRX configuration and/or an SL DTX configuration corresponding to each QoS profile or each QoS profile list under each destination of the terminal;
determining, according to the SL DRX configuration and the SL DTX configuration, SL DRX activation time and/or SL DTX activation time corresponding to each QoS profile or each QoS profile list under each destination of the terminal;
scheduling a sidelink interface logical channel belonging to each QoS profile or each QoS profile list under each destination according to the SL DRX activation time and/or the SL DTX activation time corresponding to the QoS profile or the QoS profile list.

The processor is configured to read the program in the memory and perform following operations:
if it is determined, according to the indication information, that at least part of sidelink destinations of the terminal uses SL DRX and/or SL DTX, or it is determined, according to the indication information, that a sidelink destination list uses SL DRX and/or SL DTX of the terminal, determining an SL DRX configuration and/or an SL DTX configuration corresponding to each QoS profile or each QoS profile list using SL DRX and/or SL DTX under each destination of the terminal;
determining, according to the SL DRX configuration and/or the SL DTX configuration, SL DRX activation time and/or SL DTX activation time corresponding to each QoS profile or each QoS profile list under each destination using SL DRX and/or SL DTX of the terminal;
scheduling, according to the SL DRX activation time and/or the SL DTX activation time corresponding to each QoS profile or each QoS profile list under each destination using SL DRX and/or SL DTX of the terminal, a sidelink interface logical channel belonging to the QoS profile or the QoS profile list.

The processor is configured to read the program in the memory and perform following operations:
if it is determined, according to the indication information, that at least part of QoS profiles or QoS profile lists of the sidelink interface of the terminal uses SL DRX and/or SL DTX, or it is determined, according to the indication information, that a sidelink interface QoS profile or a QoS profile list uses SL DRX and/or SL DTX of the terminal, determining an SL DRX configuration and/or an SL DTX configuration corresponding to each QoS profile or each QoS profile list using SL DRX and/or SL DTX under each destination of the terminal;
determining, according to the SL DRX configuration and/or the SL DTX configuration, SL DRX activation time and/or SL DTX activation time corresponding to each QoS profile or each QoS profile list using SL DRX and/or SL DTX under each destination of the terminal;
scheduling, according to the SL DRX activation time and/or the SL DTX activation time corresponding to each QoS profile or each QoS profile list using SL DRX and/or SL DTX under each destination of the terminal, a sidelink interface logical channel belonging to the QoS profile or the QoS profile list.

The processor is configured to read the program in the memory and execute following operations:
if it is determined, according to the indication information, that part of QoS profiles or QoS profile lists under at least a part of sidelink destinations of the terminal uses SL DRX and/or SL DTX, or a QoS profile list using SL DRX and/or SL DTX under each sidelink destination of the terminal is determined according to the indication information, determining an SL DRX configuration and/or an SL DTX configuration corresponding to the QoS profile or the QoS profile list under the destination using SL DRX and/or SL DTX of the terminal;
according to the SL DRX configuration and/or the SL DTX configuration, determining SL DRX activation time and/or SL DTX activation time corresponding to the QoS profile or the QoS profile list under the destination using SL DRX and/or SL DTX of the terminal;
scheduling, according to the SL DRX activation time and/or the SL DTX activation time corresponding to the QoS profile or the QoS profile list under the destination using SL DRX and/or SL DTX of the terminal, sidelink interface logical channels belonging to the QoS profile or the QoS profile list.

The processor is configured to read the program in the memory and perform following operations:
if it is determined, according to the indication information, that SL DRX and/or SL DTX is not applied at the sidelink interface of the terminal, scheduling any sidelink interface logical channel belonging to the terminal by using all available resources of the sidelink interface;
if it is determined, according to the indication information, that SL DRX and/or SL DTX is not applied to at least part of the sidelink destinations of the terminal, or a sidelink destination list not using SL DRX and/or SL DTX is determined for the terminal according to the indication information, scheduling a sidelink interface logical channel under each destination not using SL DRX and/or SL DTX and belonging to the terminal, by using all available resources of the sidelink interface;
if it is determined, according to the indication information, that SL DRX and/or SL DTX is not applied to at least part of QoS profiles or QoS profile lists of the sidelink interface of the terminal, or it is determined, according to the indication information, that SL DRX and/or SL DTX is not applied to part of QoS profiles or QoS profile lists under the at least part of sidelink destinations of the terminal, then scheduling, by using all available resources of the sidelink interface, a sidelink interface bearer belonging to the QoS profile or the QoS profile list under a destination not using SL DRX and/or SL DTX of the terminal;
if a sidelink interface QoS profile not using SL DRX and/or SL DTX is determined according to the indication information, scheduling a sidelink interface logical channel belonging to the QoS profile not using SL DRX and/or SL DTX under each destination of the terminal, by using all available resources of the sidelink interface;
if a sidelink interface QoS profile list that does not use SL DRX and/or SL DTX is determined according to the indication information, or a QoS profile list not using SL DRX and/or SL DTX under each sidelink destination of the terminal is determined according to the indication information, scheduling, by using all available resources of the sidelink interface, a sidelink interface logical channel belonging to a QoS profile list not using SL DRX and/or SL DTX under each destination of the terminal.

In order to achieve the above objective, the embodiments of the present disclosure further provide a resource scheduling apparatus. The apparatus includes:
a receiving unit, used to receive indication information from a terminal; and
a scheduling unit, used to perform scheduling of a sidelink interface of the terminal according to the indication information.

In order to achieve the above objective, the embodiments of the present disclosure further provide a processor-readable storage medium, wherein the processor-readable storage medium stores a program, the program is configured to cause a processor to perform steps of the resource scheduling method described above.

The above technical solution of the present disclosure has at least the following beneficial effects:
in the foregoing technical solutions of the embodiments of the present disclosure, the terminal sends indication information to the network side device, wherein the indication information is used to indicate a usage condition of the sidelink SL DRX and/or SL DTX of the terminal, so that the network side device can reasonably perform scheduling of the sidelink interface on the terminal, thereby improving the resource utilization rate of the sidelink interface.

### BRIEF DESCRIPTION OF THE DRAWINGS

FIG. 1 is a schematic diagram of an existing DRX cycle;
FIG. 2 is a first schematic flowchart of an information transmission method according to some embodiments of the present disclosure;
FIG. 3 is a second schematic flowchart of a resource scheduling method according to some embodiments of the present disclosure;
FIG. 4 is a structural block diagram of a terminal according to some embodiments of the present disclosure;
FIG. 5 is a schematic block diagram of an information transmission apparatus according to some embodiments of the present disclosure;
FIG. 6 is a structural block diagram of a network side device according to some embodiments of the present disclosure;
FIG. 7 is a schematic block diagram of a resource scheduling apparatus according to some embodiments of the present disclosure.

### DETAILED DESCRIPTION

In the embodiments of the present disclosure, a term "and/or" describes an association relationship between associated objects, and indicates that there may be three relationships, for example, A and/or B may indicate that A exists alone, that A and B exist at the same time, and that B exists alone. The character "/" generally indicates that the associated objects have a "or" relationship.

In this embodiment of this application, the term "a plurality of means two or more, and other quantifiers are similar to this term.

The technical solutions in the embodiments of this application will be clearly and completely described below with reference to the accompanying drawings in the embodiments of this application, and obviously, the described embodiments are merely some embodiments of the present application, and are not all embodiments. All other embodiments obtained by a person of ordinary skill in the art based on the embodiments of the present application without creative efforts shall fall within the protection scope of the present application.

It should be noted that a universal user to network Interface (Uu interface) between the terminal and the network side device in traditional cellular network communication is used for uplink/downlink data and control information transmission.

The DRX mechanism of the Uu interface of the cellular communication system is as follows:
in a mobile communication system based on a shared channel, transmission of uplink and downlink data is controlled by a base station scheduler, and when the scheduler determines to schedule a user, the scheduler notifies to the terminal which resource is used for the terminal to send or receive data;
the terminal (User Equipment, UE) monitors the control channel, and completes sending or receiving of the data according to indication from the control channel when the terminal detects that the control channel includes scheduling information of the terminal; in an activated state, since the terminal does not determine when a base station (eNB) schedules the terminal, a common operational mode is that the terminal continuously monitors the control channel, and parses each subframe containing a downlink scheduling control channel of the terminal to determine whether the terminal is scheduled.

This operational mode can obtain a higher efficiency in case that a data volume of the terminal is large and the terminal may be frequently scheduled. However, for some services having a relatively low data arrival frequency, this operational mode causes the number of scheduled times of the terminal to be small, and if the terminal still continuously monitors the control channel, the power consumption of the terminal is undoubtedly increased.

In order to solve the problem of power consumption, the cellular network communication system adopts a DRX operational mode, and in this operational mode, the terminal periodically monitors the control channel, thereby achieving the purpose of saving power.

The basic principle of DRX is described below, so as to better understand the method of the present disclosure.

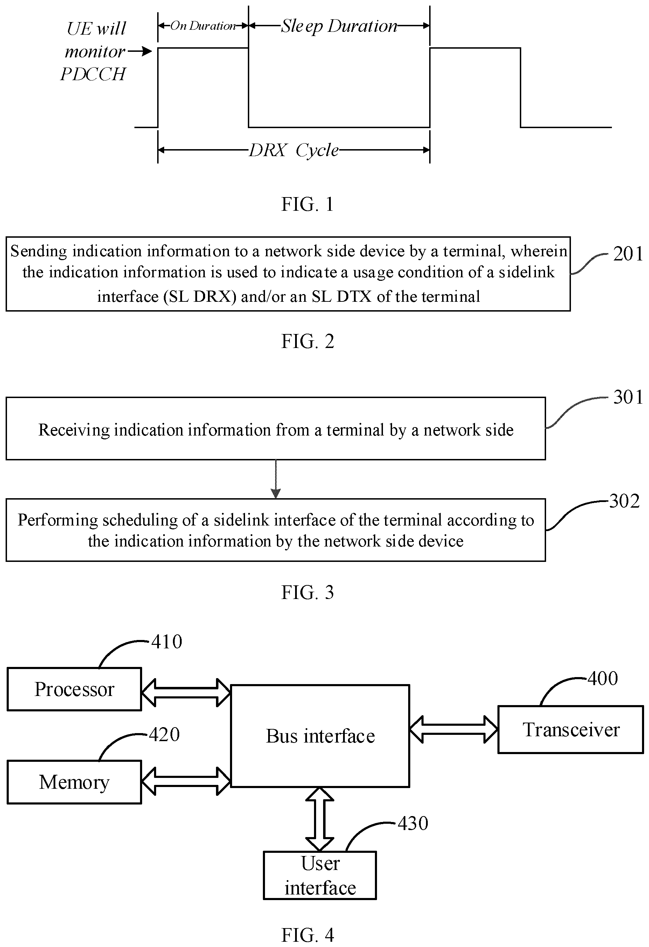

As shown in FIG. 1, an on duration (On Duration) indicates a time duration in which a UE monitors a control channel, and in which radio frequency channel is opened, and the control channel is continuously monitored; the UE is in a sleep state in a time duration (a sleep duration (Opportunity for DRX)) other than the On Duration, a radio frequency link of the UE is turned off, and the control channel is no longer monitored, so as to achieve the purpose of power saving. The On Duration is periodic (in cycles), and a specific period of the On Duration is configured by the eNB .

It should be noted that the DRX mechanism of the cellular network is related to an arrival model of the data service, that is, arrival of data packets is burst (it can be understood that once the data packet arrives, more packets can continuously arrive within a short time). In order to adapt to such service arrival characteristics, a Long Term Evolution (LTE) DRX process uses a plurality of timers (Timer) and is combined with a Hybrid Automatic Repeat reQuest (HARQ) process, so as to achieve better power saving performance.

For a DRX-related timer:
1) a drx-onDurationTimer: time durations during which the UE wakes up periodically to monitor the control channel.
2) a Short DRX Cycle Timer (Short DRX Cycle Timer): in order to better match the characteristics of data service arrival, the cellular network communication system supports configuring two DRX cycles: a long cycle and a short cycle; onDuration timers of the two cycles are the same, but sleep durations are different; in the short cycle, the sleep duration is relatively shorter, and the UE may monitor the control channel once again more quickly; the long cycle has to be configured and is an initial state of the DRX process; the short cycle is optional; the short DRX cycle Timer sets a short cycle duration; after the short DRX cycle Timer expires, the UE will use the Long Cycle.
3) a drx-Inactivity Timer: after DRX is configured, and when the UE receives the control signaling of the HARQ initial transmission within the time in which the control channel is allowed to be monitored, the UE opens the timer, and before the timer expires, the UE continuously monitors the control channel; if the UE receives the control signaling of the HARQ initial transmission before the drx-InactivityTimer expires, the UE will terminate the drx-InactivityTimer and restart the drx-InactivityTimer.
4) HARQ Round Trip Time (RTT) Timer: the timer includes a DRX-HARQ downlink RTT Timer (drx-HARQ-RTT-TimerDL) and a DRX uplink RTT Timer (drx-HARQ-RTT-TimerUL), the functions of which are to enable the UE to not monitor the control channel before the next retransmission arrives, thereby achieving a better power saving effect. Taking downlink as an example, a first symbol after transmission of a Physical Uplink Control Channel (PUCCH) of the UE-related process is started, and the timer will be turned on. If data in the corresponding HARQ process is not successfully decoded after previous HARQ transmission (UE feeds back a negative acknowledgement (NACK)), then after the drx-HARQ-RTT-TimeRDL has timed out, the UE starts a drx-downlink retransmission timer (drx-RetransmissionTimerDL). If the data in the corresponding HARQ process is successfully decoded after the previous HARQ transmission (the UE feeds back a positive ACKnowledgement (ACK)), then after the drx-HARQ-RTT-TimerDL timer expires, the UE does not start the drx-RetransmissionTimerDL; if the drx-HARQ-RTT-TimerDL runs only, then the UE does not monitor the control channel.
5) HARQ Retransmission Timer: The HARQ retransmission timer includes a DRX-RetransmissionTimerDL or a DRX-Uplink Retransmission Timer. Taking downlink as an example, during the operation of the drx-RetransmissionTimerDL, the UE monitors the control signaling and waits for scheduling of retransmission of a corresponding HARQ process.

It can be seen from the above process that when any of the On duration Timer, the HARQ Retransmission Timer and the Inactivity Timer is running, the UE will monitor the control channel. The time duration in which the UE monitors the control channel is also referred to as the Active Time, or may be referred to as the activation time. In the LTE system, the active time is influenced by the DRX timer and other factors, and the Active Time of the LTE UE includes the following time:
operational time of the drx-onDurationTimer, the drx-InactivityTimer, the drx-RetransmissionTimer DL, the drx-RetransmissionTimerUL or the random access contention resolution timer (ra-ContentionResolutionTimer);
time in which the UE waits a Physical Downlink Control Channel (PDCCH) sent by a base station, after the UE sends a Scheduling Request (SR);
time in which a non-contention random access UE waits a PDCCH scheduled by a Cell Radio Network Tempory Identity (C-RNTI), after the non-contention random access UE receives a random access response (Random Access Response, RAR).

It should also be noted that sidelink communication refers to a manner in which neighboring terminals may perform data transmission through a sidelink within a short distance range. A radio interface corresponding to the sidelink is referred to as a direct communication interface, also referred to as a sidelink interface.

A sidelink interface resource allocation mode is divided into two types:
a resource allocation mode (also referred to as Mode 1) scheduled by a network: that is, a network side device allocates to a terminal resources used for sending sidelink interface data;
a resource allocation mode (also referred to as Mode 2) selected by the terminal, that is, the terminal autonomously selects a sidelink sending resource from a resource pool available to a sidelink interface.

According to the current mechanism, for sidelink multicast and broadcast, whether SL DRX/DTX is used depends on the sending UE, and is not known by the network; for a sending UE in the RRC connected state and using a sidelink interface of the resource allocation mode (mode 1) scheduled by the network, the network side device cannot accurately determine the activation time of the DRX and/or DTX of the terminal at the sidelink interface, and therefore, the sidelink interface resource cannot be reasonably scheduled for the terminal.

In order to solve the above problem, the embodiments of the present application provide a resource scheduling method and a resource scheduling apparatus, wherein the method and the apparatus are based on the same inventive concept, and implementations of the apparatus and the method may be obtained by referring to each other due to the similar principles of the method and the apparatus solving the problem, and details are not described herein again.

As shown in FIG. 2, a schematic flowchart of a resource scheduling method provided by an embodiment of the present disclosure is applied to a terminal, and includes:
Step 201: the terminal sends indication information to a network side device, wherein the indication information is used to indicate a usage condition of a sidelink interface (SL DRX) and/or an SL DTX of the terminal.

Here, the terminal is a sidelink terminal using the resource allocation mode (Mode 1) scheduled by the network.

It should be noted that the indication information is used to indicate the usage condition of the sidelink interface (SL DRX) and/or the SL DTX of the terminal. Specifically, the indication information is used to indicate whether a target object directly communicating with the terminal uses SL DRX and/or SL DTX, wherein the target object includes one of the following:
a sidelink interface;
a sidelink destination;
a sidelink destination list;
a Quality of Service Profile or a QoS profile list of a sidelink interface;
a QoS profile or a QoS profile list under each destination of the sidelink interface.

In this way, based on the indication information, DRX activation time and/or DTX activation time of the terminal at the sidelink interface can be accurately determined, so that scheduling of the sidelink interface is reasonably performed on the terminal, and the resource utilization rate of the sidelink interface is improved.

According to the resource scheduling method of the embodiments of the present disclosure, the terminal sends the indication information to the network side device, wherein the indication information is used to indicate the usage condition of SL DRX and/or SL DTX of the terminal in the sidelink interface, so that the network side device can reasonably perform sidelink interface scheduling on the terminal, thereby improving the resource utilization rate of the sidelink interface.

Optionally, the contents of the indication information includes one of the following:
whether SL DRX and/or SL DTX is applied at a sidelink interface for the terminal;
whether SL DRX and/or SL DTX is applied for each sidelink destination of the terminal;
whether SL DRX and/or SL DTX is applied for each Quality of Service (QoS) profile corresponding to each QoS of the terminal;
whether SL DRX and/or SL DTX is applied to each QoS profile list of a sidelink interface of the terminal;
whether SL DRX and/or SL DTX is applied to each QoS profile of each sidelink destination of the terminal;
whether SL DRX and/or SL DTX is applied to each QoS profile list of each sidelink destination of the terminal;
a sidelink destination list using SL DRX and/or SL DTX of the terminal;
a sidelink destination list not using SL DRX and/or SL DTX of the terminal;
a sidelink interface QoS profile using SL DRX and/or SL DTX of the terminal;
a sidelink interface QoS profile list using SL DRX and/or SL DTX of the terminal;
a sidelink interface QoS profile not using SL DRX and/or SL DTX of the terminal;
a sidelink interface QoS profile list not using SL DRX and/or SL DTX of the terminal;
a QoS profile list using SL DRX and/or SL DTX under each sidelink destination of the terminal;
a QoS profile list not using SL DRX and/or SL DTX under each sidelink destination of the terminal.

Optionally, the indication information is determined by the terminal according to a transmission configuration (Tx profile) configured by a higher layer of the terminal.

Here, the higher layer of the terminal issues the Tx profile to a lower layer of the terminal.

Optionally, the higher layer of the terminal is a proximity-based services layer (prose layer), and the lower layer of the terminal is an RRC layer.

Specifically, the contents of the Tx profile include one of the following:
mapping between a service type and a protocol version of the sidelink interface of the terminal;
mapping between a service and a protocol version of the sidelink interface of the terminal;
a protocol version used when the terminal sends data at the sidelink interface;
mapping between the protocol version and each destination of the sidelink interface of the terminal;
mapping between the protocol version and each QoS profile of the sidelink interface of the terminal;
mapping between the protocol version and each QoS profile list of the sidelink interface of the terminal;
mapping between the protocol version and each QoS profile under each destination of the sidelink interface of the terminal;
mapping between the protocol version and each QoS profile list under each destination of the sidelink interface of the terminal.

It should be noted that the service type may be a Provider Service Identifier (PSID)/Intelligent Transportation System-Application Identifier (ITS-AID).

The protocol version may be a Third Generation Partnership Project (3GPP) Rel-16, Rel-17, etc.

Here, the QoS profile may be identified by a 5G QoS Identifier (5QI) in a New Radio (NR) system, or other QoS parameters.

Optionally, each QoS profile of the sidelink interface of the terminal is identified by one of the following identification manners:
a ProSe QoS Identifier (PQI) corresponding to the QoS profile is used as an identifier of the QoS profile;
when the terminal configures SL DRX and/or SL DTX for the QoS profile according to a System Information Block (SIB), a position of the QoS profile appearing in the SIB determines an index of the QoS profile, the index is used as the identifier of the QoS profile;
the terminal receives a SIB or a dedicated signaling from the network side device, and uses the index of the QoS profile indicated in the SIB or the dedicated signaling as the identifier of the QoS profile.

Optionally, the indication information is carried in any one of the following manners:
a SidelinkUEInformation message;
a RRC signaling;
a Media Access Control Control Element (MAC CE).

In an optional implementation, a condition that triggers the terminal to send the indication information to the network side device includes one of the following:
the indication information is carried in the SidelinkUEinformation message, and the terminal satisfies a condition of transmitting the SidelinkUEinformation message;
receiving a Tx profile configured by a higher layer, and generating the indication information by the terminal according to the Tx profile;
a newly arriving service flow (Quality of Service Flow, QoS flow) belongs to a new QoS profile;
a newly arriving QoS flow belongs to a new QoS profile list;
data transmission of a QoS flow belonging to a first QoS profile ends, wherein the first QoS profile is one of all QoS profiles under a first destination of the sidelink interface of the terminal, and the first destination is one of all sidelink destinations of the terminal;
data transmissions of all QoS flows belonging to a first QoS profile list end, the first QoS profile list is one of all QoS profile lists under the second destination of the sidelink interface of the terminal, and the second destination is one of all sidelink destinations of the terminal;
a state of whether the second QoS profile uses SL DRX and/or SL DTX changes, wherein the second QoS profile is one of all QoS profiles under a third destination of the sidelink interface of the terminal, and the third destination is one of all sidelink destinations of the terminal;
a state of whether the second QoS profile list uses SL DRX and/or SL DTX changes, wherein the second QoS profile list is one of all QoS profile lists under a fourth destination of the sidelink interface of the terminal, and the fourth destination is one of all sidelink destinations of the terminal;
being based on the terminal's implementation.

Here, the terminal determines when to send the indication information to the network side device based on the terminal's own implementation. Here, being based on the terminal's own implementation means determination based on a design of the terminal itself.

It should be noted that, if the indication information includes contents related to a QoS profile, the condition that triggers the terminal to send the indication information to the network side device may include one of the foregoing.

If the indication information does not include the contents related to the QoS profile, the condition that triggers the terminal to send the indication information to the network side device includes one of the following:
the indication information is carried in the SidelinkUEInformation message, and the terminal satisfies a condition of transmitting the SidelinkUEInformation message;
a Tx profile configured by a higher layer is received, and the indication information is generated by the terminal according to the Tx profile;
being based on the terminal's implementation.

According to the information transmission method of the embodiments of the present disclosure, the terminal sends the indication information to the network side device, wherein the indication information is used to indicate the usage condition of SL DRX and/or SL DTX of the terminal at the sidelink interface, so that the network side device can reasonably perform the sidelink interface scheduling on the terminal, thereby improving the resource utilization rate of the sidelink interface.

FIG. 3 shows a schematic flowchart of a resource scheduling method provided by some embodiments of the present disclosure. The method is applied to a network side device. The method includes steps 301-302.

Step 301: receiving, by the network side device, indication information sent by a terminal.

Here, the terminal is a sidelink terminal using the resource allocation mode (Mode 1) scheduled by the network.

It should be noted that the indication information is used to indicate the usage condition of the sidelink interface (SL DRX) and/or the SL DTX of the terminal. Specifically, the indication information is used to indicate whether a target object directly communicating with the terminal uses SL DRX and/or SL DTX, wherein the target object includes one of the following:
a sidelink interface;
a sidelink destination;
a sidelink destination list;
a Quality of Service Profile or a QoS profile list of a sidelink interface;
a QoS profile or a QoS profile list under each destination of the sidelink interface.

Step 302: performing scheduling of the sidelink interface of the terminal according to the indication information by the network side device.

In this step, the network side device can accurately determine DRX activation time and/or DTX activation time of the terminal at the sidelink interface based on the indication information, thereby reasonably scheduling the sidelink interface of the terminal, and improving the resource utilization rate of the sidelink interface.

According to the resource scheduling method of the embodiments of the present disclosure, the network side device receives the indication information sent by the terminal, and executes the scheduling for the sidelink interface of the terminal according to the indication information, so that the scheduling of the sidelink interface can be reasonably performed on the terminal, and the resource utilization rate of the sidelink interface is improved.

Optionally, the contents of the indication information include one of the following:
whether SL DRX and/or SL DTX is applied at a sidelink interface for the terminal;
whether SL DRX and/or SL DTX is applied for each sidelink destination of the terminal;
whether SL DRX and/or SL DTX is applied for each Quality of Service (QoS) profile corresponding to each QoS of the terminal;
whether SL DRX and/or SL DTX is applied to each QoS profile list of a sidelink interface of the terminal;
whether SL DRX and/or SL DTX is applied to each QoS profile of each sidelink destination of the terminal;
whether SL DRX and/or SL DTX is applied to each QoS profile list of each sidelink destination of the terminal;
a sidelink destination list using SL DRX and/or SL DTX of the terminal;
a sidelink destination list not using SL DRX and/or SL DTX of the terminal;
a sidelink interface QoS profile using SL DRX and/or SL DTX of the terminal;
a sidelink interface QoS profile list using SL DRX and/or SL DTX of the terminal;
a sidelink interface QoS profile not using SL DRX and/or SL DTX of the terminal;
a sidelink interface QoS profile list not using SL DRX and/or SL DTX of the terminal;
a QoS profile list using SL DRX and/or SL DTX under each sidelink destination of the terminal;
a QoS profile list not using SL DRX and/or SL DTX under each sidelink destination of the terminal.

In an optional implementation manner, in step 302, performing scheduling of the sidelink interface of the terminal according to the indication information by the network side device includes:
if it is determined, according to the indication information, that the terminal uses SL DRX and/or SL DTX in a sidelink interface, determining an SL DRX configuration and/or an SL DTX configuration corresponding to each QoS profile or each QoS profile list under each destination of the terminal; wherein it should be noted that, if it is determined that the terminal uses SL DRX in the sidelink interface, then determining an SL DRX configuration corresponding to each QoS profile or each QoS profile list under each destination of the terminal;
if it is determined that the terminal uses SL DTX in the sidelink interface, determining a SL DTX configuration corresponding to each QoS profile or each QoS profile list under each destination of the terminal;
if it is determined that the terminal uses SL DRX and SL DTX in the sidelink interface, determining a SL DRX configuration and a SL DTX configuration corresponding to each QoS profile or each QoS profile list under each destination of the terminal.

Meaning of "and/or" in the following embodiments may be obtained by reference to this embodiment, and details are not described again subsequently.

SL DRX activation time and/or SL DTX activation time corresponding to each QoS profile or each QoS profile list under each destination of the terminal are determined according to the SL DRX configuration and/or the SL DTX configuration.

This step specifically includes:
determining, according to the SL DRX configuration, SL DRX activation time corresponding to each QoS profile or each QoS profile list under each destination of the terminal;
determining, according to the SL DTX configuration, SL DTX activation time corresponding to each QoS profile or each QoS profile list under each destination of the terminal;
determining, according to the SL DRX configuration and the SL DTX configuration, SL DRX activation time and/or SL DTX activation time corresponding to each QoS profile or each QoS profile list under each destination of the terminal; wherein, the SL DRX activation time refers to time when the terminal is allowed to monitor the control channel and/or perform data reception at the side link. The SL DTX activation time refers to time when the terminal is allowed to send control information and/or data at a sidelink interface; in this way, the network device can accurately determine the DRX activation time and/or the DTX activation time of the terminal at the sidelink interface;
scheduling a sidelink interface logical channel belonging to each QoS profile or each QoS profile list under each destination according to the SL DRX activation time and/or the SL DTX activation time corresponding to the QoS profile or the QoS profile list; here, the SL DRX activation time and/or the SL DTX activation time.

The network side device can accurately determine the SL DRX activation time and/or the SL DTX activation time corresponding to each QoS profile or each QoS profile list under each destination of the sidelink interface of the terminal according to the indication information, and the network side device can reasonably perform scheduling of the sidelink interface on the terminal, thereby improving the resource utilization rate of the sidelink interface.

In an optional implementation manner, in step 302, performing scheduling of the sidelink interface of the terminal according to the indication information by the network side device includes:
if it is determined, according to the indication information, that at least part of sidelink destinations of the terminal uses SL DRX and/or SL DTX, or it is determined, according to the indication information, that a sidelink destination list uses SL DRX and/or SL DTX of the terminal, determining an SL DRX configuration and/or an SL DTX configuration corresponding to each QoS profile or each QoS profile list using SL DRX and/or SL DTX under each destination of the terminal; wherein, it may be required, according to an actual situation, that part of the destinations may use SL DRX and/or SL DTX, and another part of the destinations does not use SL DRX and/or SL DTX; or, according to the actual situation, it is determined, based on indication information, a sidelink destination list using SL DRX and/or SL DTX of the terminal;
determining, according to the SL DRX configuration and/or the SL DTX configuration, SL DRX activation time and/or SL DTX activation time corresponding to each QoS profile or each QoS profile list under each destination using SL DRX and/or SL DTX of the terminal; wherein, the SL DRX activation time refers to time when the terminal is allowed to monitor the control channel and/or perform data reception at the sidelink interface, the SL DTX activation time refers to time when the terminal is allowed to send control information and/or data at a sidelink interface; in this way, the network device can accurately determine the DRX activation time and/or the DTX activation time of the terminal at the sidelink interface;
scheduling, according to the SL DRX activation time and/or the SL DTX activation time corresponding to each QoS profile or each QoS profile list under each destination using SL DRX and/or SL DTX of the terminal, a sidelink interface logical channel belonging to the QoS profile or the QoS profile list.

Here, the network side device can reasonably schedule the sidelink interface of the terminal according to the accurately determined time for allowing the terminal to monitor the control channel at the sidelink interface, i.e. the SL DRX activation time and/or the SL DTX activation time corresponding to each QoS profile or each QoS profile list under each destination of the SL DRX and/or SL DTX, and the resource utilization rate of the sidelink interface can be improved.

In an optional implementation manner, in step 302, performing scheduling of the sidelink interface of the terminal according to the indication information by the network side device includes:
if it is determined, according to the indication information, that at least part of QoS profiles or QoS profile lists of the sidelink interface of the terminal uses SL DRX and/or SL DTX, or it is determined, according to the indication information, that a sidelink interface QoS profile or a QoS profile list uses SL DRX and/or SL DTX of the terminal, determining an SL DRX configuration and/or an SL DTX configuration corresponding to each QoS profile or each QoS profile list using SL DRX and/or SL DTX under each destination of the terminal; here, according to the actual situation, it may be required that part of the QoS profiles or the QoS profile lists may use SL DRX and/or SL DTX, and another part of the QoS profiles or the QoS profile lists does not use SL DRX and/or SL DTX;
determining, according to the SL DRX configuration and/or the SL DTX configuration, SL DRX activation time and/or SL DTX activation time corresponding to each QoS profile or each QoS profile list using SL DRX and/or SL DTX under each destination of the terminal; here, the SL DRX activation time refers to time when the terminal is allowed to monitor the control channel and/or perform data reception at the sidelink interface; the SL DTX activation time refers to time when the terminal is allowed to send control information and/or data at the sidelink interface; in this way, the network device can accurately determine the DRX activation time and/or the DTX activation time of the terminal at the sidelink interface;
scheduling, according to the SL DRX activation time and/or the SL DTX activation time corresponding to each QoS profile or each QoS profile list using SL DRX and/or SL DTX under each destination of the terminal, a sidelink interface logical channel belonging to the QoS profile or the QoS profile list, respectively.

Here, the network side device can accurately determine, according to the indication information, the SL DRX activation time and/or the SL DTX activation time corresponding to each QoS profile or each QoS profile list using SL DRX and/or SL DTX at each sidelink destination of the terminal, thereby ensuring that the network side device can reasonably perform scheduling of the sidelink interface on the terminal, and improving the resource utilization rate of the sidelink interface.

In an optional implementation manner, in step 302, performing scheduling of the sidelink interface of the terminal according to the indication information by the network side device includes:
if it is determined, according to the indication information, that part of QoS profiles or QoS profile lists under at least a part of sidelink destinations of the terminal uses SL DRX and/or SL DTX, or a QoS profile list using SL DRX and/or SL DTX under each sidelink destination of the terminal is determined according to the indication information, determining an SL DRX configuration and/or an SL DTX configuration corresponding to each QoS profile or each QoS profile list under each destination using SL DRX and/or SL DTX of the terminal; wherein, it is possible that, according to an actual situation, only part of the QoS profiles or QoS profile lists in part of the destinations of the terminal may use SL DRX and/or SL DTX, and another part of the QoS profiles or QoS profile lists of the terminal does not use SL DRX and/or SL DTX;
according to the SL DRX configuration and/or the SL DTX configuration, determining the SL DRX activation time and/or the SL DTX activation time corresponding to the QoS profile or the QoS profile list under the destination using SL DRX and/or SL DTX of the terminal; the SL DRX activation time refers to time when the terminal is allowed to monitor the control channel and/or perform data reception at the sidelinke interface; the SL DTX activation time refers to time when the terminal is allowed to send control information and/or data at the sidelink interface; in this way, the network device can accurately determine the DRX activation time and/or the DTX activation time of the terminal at the sidelink interface;
scheduling, according to the SL DRX activation time and/or the SL DTX activation time corresponding to the QoS profile or the QoS profile list under the destination using SL DRX and/or SL DTX of the terminal, sidelink interface logical channels belonging to the QoS profile or the QoS profile list, respectively; here, the network device may determine, according to the indication information, which QoS profiles or QoS profile lists under which destinations of the sidelink interface use SL DRX and/or SL DTX. Therefore, the SL DRX activation time and/or the SL DTX activation time corresponding to the QoS profile or the QoS profile list under the destination using the SL DRX and/or the SL DTX may be determined according to the SL DRX configuration and/or the SL DTX configuration, thereby ensuring that the network side device can reasonably perform scheduling of the sidelink interface on the terminal, and improving the resource utilization rate of the sidelink interface.

In an optional implementation manner, in step 302, performing scheduling of the sidelink interface of the terminal according to the indication information by the network side device includes:
if it is determined, according to the indication information, that SL DRX and/or SL DTX is not applied at the sidelink interface of the terminal, scheduling any sidelink interface logical channel belonging to the terminal by using all available resources of the sidelink interface;
if it is determined, according to the indication information, that SL DRX and/or SL DTX is not applied to at least part of the sidelink destinations of the terminal, or a sidelink destination list not using SL DRX and/or SL DTX is determined for the terminal according to the indication information, scheduling a sidelink interface logical channel under each destination not using SL DRX and/or SL DTX and belonging to the terminal, by using all available resources of the sidelink interface;
if it is determined, according to the indication information, that at least part of the QoS profiles or the QoS profile lists of SL DRX and/or SL DTX is not applied at the sidelink interface of the terminal, or it is determined, according to the indication information, that part of the QoS profiles or the QoS profile lists under the SL DRX and/or SL DTX is not applied to at least part of the sidelink destinations of the terminal, then scheduling, by using all available resources of the sidelink interface, the sidelink interface logical channel belonging to the QoS profile or the QoS profile list under the destination of the terminal and not using SL DRX and/or SL DTX;
if a sidelink interface QoS profile not using SL DRX and/or SL DTX is determined according to the indication information, scheduling the sidelink interface logical channel belonging to the QoS profile not using SL DRX and/or SL DTX under each destination of the terminal, by using all available resources of the sidelink interface;
if a sidelink interface QoS profile list that does not use SL DRX and/or SL DTX is determined according to the indication information, or a QoS profile list not using SL DRX and/or SL DTX under each sidelink destination of the terminal is determined according to the indication information, scheduling, by using all available resources of the sidelink interface, a sidelink interface logical channel belonging to a QoS profile list not using SL DRX and/or SL DTX under each destination of the terminal.

According to the resource scheduling method of the embodiments of the present disclosure, the network side device receives the indication information sent by the terminal, and executes the scheduling for the sidelink interface of the terminal according to the indication information, so that the scheduling of the sidelink interface of the terminal can be reasonably performed, and the resource utilization rate of the sidelink interface is improved.

The following embodiments specifically illustrate the implementation processes of the method with regard to different contents indicated by the indication information.

Embodiment 1: the contents of the indication information include whether the terminal uses SL DRX and/or SL DTX at the sidelink interface.

Step S1: a higher layer of the terminal issues a Tx profile to a lower layer of the terminal.

Here, the Tx profile indicates a version used when the terminal sends data at the sidelink interface.

Specifically, if the Tx profile indicates a release used for data transmission at the sidelink interface of the terminal.

If the Tx profile indicates Rel -16, then the terminal needs to use a Rel -16 compatible mode for data transmission, that is, the terminal cannot use SL DRX and/or DTX.

If the Tx profile indicates Rel -17, the terminal may transmit data using the Rel -17 mode, that is, the terminal may use SL DRX and/or DTX.

Step S2: the terminal determines the contents of the indication information.

Specifically, the indication information is determined according to a Tx profile configured by the higher layer.

The contents of the indication information may be: for a sidelink sending terminal, indicating whether the terminal uses SL DRX and/or DTX at a sidelink interface.

Step S3: the terminal sends the indication information to the network side device.

Specifically, a premise of sending the indication information (that is, the condition for triggering the terminal to send the indication information to the network side device) may be one of the following:
a1) if the indication information is carried in the SidelinkUEinformation message, reusing the sending condition of the SidelinkUEinformation message in the related art;
that is, the sending condition of SidelinkUEinformation message in the related art is satisfied, the SidelinkUEinformation message may be sent to the network side device, and the indication information may be carried in the message.
a2) receiving a Tx profile configured by a higher layer of a terminal, and generating the indication information according to the Tx profile by the terminal;
that is, after the terminal generates the indication information according to the Tx profile, the indication information is sent to the network side device.
a3) implemented depending on the terminal.

Optionally, the signaling used by the indication information may be one of the following:
a SidelinkUEinformation message;
a new RRC signaling;
a new MAC CE.

Step S4: the network side device receives the indication information sent by the terminal, and performs scheduling of the sidelink interface of the terminal according to the indication information.

The contents of the indication information includes whether SL DRX and/or SL DTX is applied at a sidelink interface for the terminal, and the behavior of the network side device is as follows:
if the terminal uses SL DRX and/or SL DTX at the sidelink interface, the network side device determines a SL DRX configuration and/or a SL DTX configuration corresponding to each QoS profile or each QoS profile list under each destination of the terminal;
determining, according to the SL DRX configuration and/or the SL DTX configuration, SL DRX activation time and/or SL DTX activation time corresponding to each QoS profile or each QoS profile list under each destination of the terminal;
scheduling, according to the SL DRX activation time and/or the SL DTX activation time corresponding to each QoS profile or each QoS profile list under each destination of the terminal, sidelink interface logical channels belonging to the QoS profile or the QoS profile list, respectively;
if SL DRX and/or SL DTX is not applied at the sidelink interface of the terminal, scheduling, by the network side device, any sidelink interface logical channel belonging to the terminal by using all available resources of the sidelink interface.

Embodiment 2: the contents of the indication information include indication for whether each destination of the sidelink interface of the terminal uses SL DRX and/or SL DTX.

Step S11: the higher layer of the terminal issues the TX profile to the lower layer of the terminal.

Here, the contents of the Tx profile include: mapping between each sidelink destination of the terminal and a protocol release.

Specifically, the TX profile may indicate a release used by the terminal to send sidelink data at each destination.

If the Tx profile indicates that the destination 1 corresponds to a Rel -16, then the terminal needs to use the Rel-16 compatible mode to send data when sending data to the destination 1 at the sidelink interface, that is, the terminal cannot use SL DRX and/or SL DTX.

If the TX profile indicates that the destination 2 corresponds to the Rel -17, the terminal may send data using the Rel -17 mode when sending data to the destination 2 at the sidelink interface, that is, the terminal may use SL DRX and/or SL DTX.

Step S12: the UE determines contents of the indication information.

Specifically, the indication information is determined according to the Tx profile configured by a higher layer.

The contents of the indication information may be: whether SL DRX and/or SL DTX is applied for each sidelink destination of the terminal.

Step S13: the terminal sends the indication information to the network side device.

Specifically, the premise for sending the indication information may be one of the following:
b1) if the indication information is carried in the SidelinkUEinformation message, reusing the sending condition of the SidelinkUEinformation message in the related art;
b2) receiving a Tx profile configured by a higher layer of a terminal, and generating the indication information according to the Tx profile by the terminal;
b3) implemented depending on the terminal.

Optionally, the signaling used by the indication information may be one of the following:
a SidelinkUEinformation message;
a new RRC signaling;
a new MAC CE.

Step S14: the network side device receives the indication information sent by the terminal, and performs scheduling of the sidelink interface of the terminal according to the indication information.

The contents of the indication information includes, whether each sidelink destination of the terminal uses SL DRX and/or SL DTX, and the behavior of the network side device is as follows:
if at least part of the destinations of the terminal uses SL DRX and/or SL DTX, then the network side device determines a SL DRX configuration and/or a SL DTX configuration corresponding to each QoS profile or each QoS profile list under each destination which uses SL DRX and/or SL DTX;
determining, according to the SL DRX configuration and/or the SL DTX configuration, SL DRX activation time and/or SL DTX activation time corresponding to each QoS profile or each QoS profile list under each destination using SL DRX and/or SL DTX;
scheduling, according to the SL DRX activation time and/or the SL DTX activation time corresponding to each QoS profile or each QoS profile list under each destination using SL DRX and/or SL DTX, sidelink interface logical channels belonging to the QoS profile or the QoS profile list, respectively;
if at least part of destinations of the terminal does not use SL DRX and/or SL DTX, then scheduling, by the network side device, a sidelink interface logical channel under each destination belonging to the terminal and not using SL DRX and/or SL DTX, by using all available resources of the sidelink interface.

Embodiment 3: the contents of the indication information include whether SL DRX and/or SL DTX is applied to each QoS profile or each QoS profile list of the sidelink interface of the terminal.

Step S101: the higher layer of the terminal issues a Tx profile to the lower layer of the terminal.

Here, the contents of the TX profile include indication about mapping between each QoS profile or each QoS profile list of the sidelink interface of the terminal and the protocol release.

If the Tx profile indicates that a QoS profile list 1 (which may be specifically a PQI list) corresponds to the Rel -16, the terminal may use the Rel-16 compatible mode to send data when the terminal sends data belonging to the logical channel of the QoS profile list at the sidelink interface, that is, the terminal cannot use SL DRX and/or SL DTX.

If the Tx profile indicates that the QoS profile list 2 corresponds to the Rel -17, the terminal may use the Rel-17 mode to send data when the terminal sends data belonging to the logical channel of the QoS profile list 2 at the sidelink interface, that is, the terminal may use SL DRX and/or SL DTX.

Step S102: the terminal determines content of the indication information.

Specifically, the indication information is determined according to a Tx profile configured by the higher layer.

The contents of the indication information may be: whether SL DRX and/or SL DTX is applied to each QoS profile or each QoS profile list of the sidelink interface of the terminal.

Each QoS profile of the sidelink interface of the terminal is identified by one of the following identification manners:
a PQI corresponding to the QoS profile is used as an identifier of the QoS profile;
when the terminal configures SL DRX and/or SL DTX for the QoS profile according to a system information block (SIB), a position of the QoS profile appearing in the SIB is taken as the index of the QoS profile, and the index is used as the identifier of the QoS profile;
the terminal receives the SIB or a dedicated signaling from the network side device, and the index of the QoS profile indicated in the SIB or the dedicated signaling is used as the identifier of the QoS profile.

Step S103: the terminal sends the indication information to the network side device.

Specifically, the premise for sending the indication information may be one of the following:
c1) if the indication information is carried in the SidelinkUEinformation message, reusing the sending condition of the SidelinkUEinformation message in the related art;
c2) receiving a Tx profile configured by a higher layer, and generating the indication information according to the Tx profile by the terminal;
c3) a newly arrived QoS flow belonging to a new QoS profile or a new QoS profile list;
c4) data transmission of a QoS flow belonging to a QoS profile or all QoS flows belonging to a QoS profile list ends;
c5) a state of whether any QoS profile or any QoS profile list uses SL DRX and/or SL DTX changes;
c6) implemented depending on the terminal.

Optionally, the signaling used by the indication information may be one of the following:
being carried by a SidelinkUEinformation message;
a new RRC signaling;
a new MAC CE.

Step S104: the network side device receives the indication information from the terminal, and performs scheduling of the sidelink interface of the terminal according to the indication information.

The contents of the indication information include whether SL DRX and/or SL DTX is applied to each QoS profile or each QoS profile list of the sidelink interface of the terminal, the behavior of the network side device is as follows:
if at least part of the QoS profiles or the QoS profile lists of the sidelink interface of the terminal uses SL DRX and/or SL DTX, the network side device determines an SL DRX configuration and/or a SL DTX configuration corresponding to each QoS profile or each QoS profile list using SL DRX and/or SL DTX under each destination of the terminal;
determining, according to the SL DRX configuration and/or the SL DTX configuration, SL DRX activation time and/or SL DTX activation time corresponding to each QoS profile or a QoS profile list using SL DRX and/or SL DTX under each destination of the terminal;
scheduling, according to the SL DRX activation time and/or the SL DTX activation time corresponding to each QoS profile or each QoS profile list using SL DRX and/or SL DTX under each destination of the terminal, a sidelink interface logical channel belonging to the QoS profile or the QoS profile list;
if at least part of the QoS profiles or the QoS profile lists of the sidelink interface of the terminal does not use SL DRX and/or SL DTX, then the network device may schedule the sidelink interface logical channel corresponding to each QoS profile or each QoS profile list not using SL DRX and/or SL DTX, by using all available resources of the sidelink interface.

Embodiment 4: the contents of the indication information include whether SL DRX and/or SL DTX is applied to each QoS profile or each QoS profile list of each sidelink destination of the terminal.

Step S1001: the higher layer of the terminal issues a Tx profile to the lower layer of the terminal.

Here, the TX profile indicates mapping between each QoS profile or each QoS profile list of each sidelink destination of the terminal and the protocol release.

If the TX profile indicates that the QoS profile list 1 (which specifically may be the PQI list) under the destination 1 corresponds to the Rel -16, the terminal needs to use the Rel -16 compatible mode to send data when sending the data belonging to the logical channel of the QoS profile list 1 to the destination 1 at the sidelink interface, that is, the terminal cannot use SL DRX and/or DTX.

If the TX profile indicates that the QoS profile list 2 (which specifically may be the PQI list) under the destination 1 corresponds to the Rel -17, the terminal needs to use the Rel -17 mode to send data when sending data belonging to the logical channel of the QoS profile list 2 to the destination 1 at the sidelink interface, that is, the terminal may use SL DRX and/or DTX.

Step S1002: the terminal determines the contents of the indication information.

Specifically, the indication information is determined according to a Tx profile configured by a higher layer.

The contents of the indication information may be: whether SL DRX and/or SL DTX is applied to each QoS profile or each QoS profile list of each sidelink destination of the terminal.

Each QoS profile of the sidelink interface of the terminal is identified by one of the following identification manners:
a PQI corresponding to the QoS profile is used as an identifier of the QoS profile;
when the terminal configures SL DRX and/or SL DTX for the QoS profile according to a system information block (SIB), a position of the QoS profile appearing in the SIB is taken as the index of the QoS profile, and the index is used as the identifier of the QoS profile;
the terminal receives the SIB or a dedicated signaling from the network side device, and the index of the QoS profile indicated in the SIB or the dedicated signaling is used as the identifier of the QoS profile.

Step S1003: the terminal sends the indication information to the network side device.

Specifically, the premise condition for sending the indication information may be one of the following:
d1) if the indication information is carried in the SidelinkUEinformation message, reusing the sending condition of the SidelinkUEinformation message in the related art;
d2) receiving a Tx profile configured by a higher layer, and generating the indication information according to the Tx profile by the terminal;
d3) a newly arrived QoS flow belonging to a new QoS profile or a new QoS profile list;
d4) data transmission of a QoS flow belonging to a QoS profile or all QoS flows belonging to a QoS profile list ends;
d5) a state of whether any QoS profile or any QoS profile list uses SL DRX and/or SL DTX changes;
c6) implemented depending on the terminal.

Optionally, the signaling used by the indication information may be one of the following:
being carried by a SidelinkUEInformation message;
a new RRC signaling;
a new MAC CE.

Step S1004: the network side device receives the indication information from the terminal, and performs scheduling of the sidelink interface of the terminal according to the indication information.

The contents of the indication information include whether SL DRX and/or SL DTX is applied to each QoS profile or each QoS profile list of the sidelink destination of the terminal, the behavior of the network side device is as follows:
if part of the QoS profiles or the QoS profile lists of at least part of sidelink destinations of the terminal uses SL DRX and/or SL DTX, the network side device determines an SL DRX configuration and/or a SL DTX configuration corresponding to each QoS profile or each QoS profile list using SL DRX and/or SL DTX under the destination of the terminal;
determining, according to the SL DRX configuration and/or the SL DTX configuration, SL DRX activation time and/or SL DTX activation time corresponding to each QoS profile or a QoS profile list using SL DRX and/or SL DTX under the destination of the terminal;
scheduling, according to the SL DRX activation time and/or the SL DTX activation time corresponding to each QoS profile or each QoS profile list using SL DRX and/or SL DTX under the destination of the terminal, a sidelink interface logical channel belonging to the QoS profile or the QoS profile list;
if part of the QoS profiles or the QoS profile lists of at least part of sidelink destinations of the terminal does not use SL DRX and/or SL DTX, then the network side device may schedule the sidelink interface logical channel belonging to the QoS profile or the QoS profile list not using SL DRX and/or SL DTX, by using all available resources of the sidelink interface.

As shown in FIG. 4, some embodiments of the present disclosure further provides a terminal. The terminal includes: a memory 420, a transceiver 400, a processor 410. The memory 420 is configured to store program instructions; the transceiver 400 is configured to send and receive data under the control of the processor 410; and the processor 410 is configured to read program instructions in the memory 420, wherein the transceiver 400 is configured to perform the following operations:
sending indication information to a network side device, wherein the indication information is used to indicate a usage condition of a sidelink interface (SL DRX) and/or an SL DTX of the terminal.

In FIG. 4, a bus architecture may include any number of interconnected buses and bridges. Specifically, various circuits including one or more processors represented by the processor 410 and a memory represented by the memory 420 linked together by. The bus architecture may also link together various other circuits, such as peripheral devices, voltage regulators, and power management circuits, etc. which are well known in the art, and therefore are not further described herein. The bus interface provides an interface. The transceiver 400 may be a plurality of elements, i.e. includes a transmitter and a receiver, and provides units for communicating with various other devices on a transmission medium, transmission media including transmission media such as a wireless channel, a wired channel, and an optical cable. For different user equipment, a user interface 430 may also be an interface that can be externally connected to a required device, and the connected device includes, but is not limited to, a keypad, a display, a speaker, a microphone, a joystick, etc.

The processor 410 is responsible for managing bus architectures and general processing, and the memory 420 may store data used by the processor 410 when performing operations.

Optionally, the processor 410 may be a Central Processing Unit (CPU), an Application-Specific Integrated Circuit (ASIC), a Field-Programmable Gate Array (FPGA), or a Complex Programmable Logic Device (CPLD), and the processor 410 may also adopt a multi-core architecture.

The processor 410 is configured to, by invoking the program instructions stored in the memory, perform any of the methods provided in the embodiments of the present application according to the obtained executable instructions. The processor 410 and the memory 420 may also be physically separately arranged.

Optionally, the content of the indication information includes one of the following:
whether SL DRX and/or SL DTX is applied at a sidelink interface for the terminal;
whether SL DRX and/or SL DTX is applied for each sidelink destination of the terminal;
whether SL DRX and/or SL DTX is applied to each QoS profile of the sidelink interface of the terminal;
whether SL DRX and/or SL DTX is applied to each QoS profile list of the sidelink interface of the terminal;
whether SL DRX and/or SL DTX is applied to each QoS profile of each sidelink destination of the terminal;
whether SL DRX and/or SL DTX is applied to each QoS profile list of each sidelink destination of the terminal;
a sidelink destination list using SL DRX and/or SL DTX of the terminal;
a sidelink destination list not using SL DRX and/or SL DTX of the terminal;
a sidelink interface QoS profile using SL DRX and/or SL DTX of the terminal;
a sidelink interface QoS profile list using SL DRX and/or SL DTX of the terminal;
a sidelink interface QoS profile not using SL DRX and/or SL DTX of the terminal;
a sidelink interface QoS profile list not using SL DRX and/or SL DTX of the terminal;
a QoS profile list using SL DRX and/or SL DTX under each sidelink destination of the terminal;
a QoS profile list not using SL DRX and/or SL DTX under each sidelink destination of the terminal.

Optionally, the indication information is determined by the terminal according to a transmission configuration (Tx profile) configured by a higher layer of the terminal.

Optionally, the contents of the Tx profile include one of the following:
mapping between a service type and a protocol version of the sidelink interface of the terminal;
mapping between a service and a protocol version of the sidelink interface of the terminal;
a protocol version used when the terminal sends data at the sidelink interface;
mapping between the protocol version and each sidelink destination of the terminal;
mapping between the protocol version and each QoS profile of the sidelink interface of the terminal;
mapping between the protocol version and each QoS profile list of the sidelink interface of the terminal;
mapping between the protocol version and each QoS profile under each sidelink destination of the terminal;
mapping between the protocol version and each QoS profile list under each sidelink destination of the terminal.

Optionally, each QoS profile of the sidelink interface of the terminal is identified by one of the following identification manners:
a ProSe QoS Identifier (PQI) corresponding to the QoS profile is used as an identifier of the QoS profile;
when the terminal configures SL DRX and/or SL DTX for the QoS profile according to a System Information Block (SIB), a position of the QoS profile appearing in the SIB determines an index of the QoS profile, the index is used as the identifier of the QoS profile;
the terminal receives a SIB or a dedicated signaling from the network side device, and uses the index of the QoS profile indicated in the SIB or the dedicated signaling as the identifier of the QoS profile.

Optionally, the indication information is carried in any one of the following manners:
a SidelinkUEInformation message;
a Radio Resource Control (RRC) signaling;
a Media Access Control Control Element (MAC CE).

Optionally, a condition that triggers the terminal to send the indication information to the network side device includes one of the following:
the indication information is carried in the SidelinkUEinformation message, and the terminal satisfies a condition of transmitting the SidelinkUEinformation message;
receiving a Tx profile configured by a higher layer, and generating the indication information by the terminal according to the Tx profile;
a newly arriving QoS flow belongs to a new QoS profile;
a newly arriving QoS flow belongs to a new QoS profile list;
data transmission of a QoS flow belonging to a first QoS profile ends, wherein the first QoS profile is one of all QoS profiles under a first destination of the sidelink interface of the terminal, and the first destination is one of all sidelink destinations of the terminal;
data transmissions of all QoS flows belonging to a first QoS profile list end, the first QoS profile list is one of all QoS profile lists under the second destination of the sidelink interface of the terminal, and the second destination is one of all sidelink destinations of the terminal;
a state of whether the second QoS profile uses SL DRX and/or SL DTX changes, wherein the second QoS profile is one of all QoS profiles under a third destination of the sidelink interface of the terminal, and the third destination is one of all sidelink destinations of the terminal;
a state of whether the second QoS profile list uses SL DRX and/or SL DTX changes, wherein the second QoS profile list is one of all QoS profile lists under a fourth destination of the sidelink interface of the terminal, and the fourth destination is one of all sidelink destinations of the terminal;
being based on the terminal's implementation.

According to the terminal of the embodiments of the present disclosure, the terminal sends indication information to the network side device, wherein the indication information is used to indicate the usage condition of the sidelink SL DRX and/or the SL DTX of the terminal, so that the network side device can reasonably perform scheduling of the sidelink interface on the terminal, and the resource utilization rate of the sidelink interface is improved.

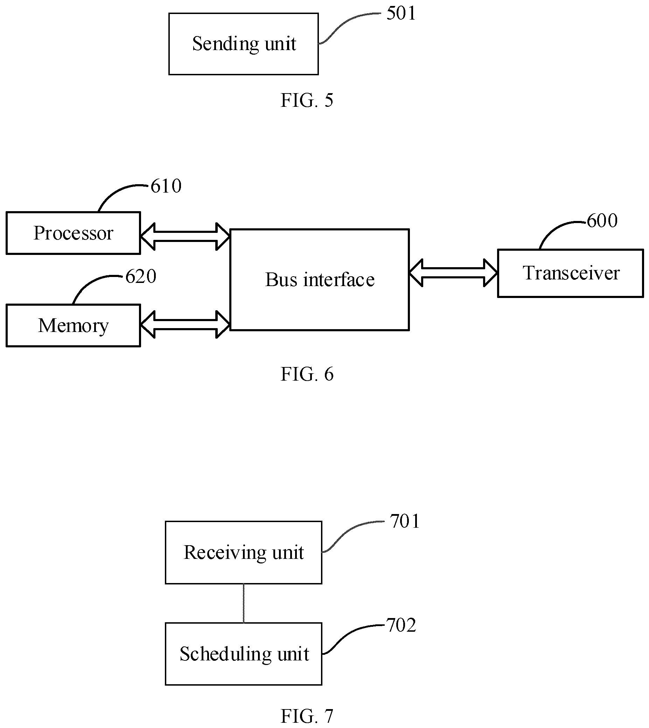

As shown in FIG. 5, some embodiments of the present disclosure further provide an information transmission apparatus. The apparatus includes a sending unit 501, used to send indication information to a network side device, wherein the indication information is used to indicate a usage condition of a sidelink interface (SL DRX) and/or an SL DTX of the terminal.

Optionally, the contents of the indication information include one of the following:
whether SL DRX and/or SL DTX is applied at a sidelink interface for the terminal;
whether SL DRX and/or SL DTX is applied for each sidelink destination of the terminal;
whether SL DRX and/or SL DTX is applied to each QoS profile of the sidelink interface of the terminal;
whether SL DRX and/or SL DTX is applied to each QoS profile list of the sidelink interface of the terminal;
whether SL DRX and/or SL DTX is applied to each QoS profile of each sidelink destination of the terminal;
whether SL DRX and/or SL DTX is applied to each QoS profile list of each sidelink destination of the terminal;
a sidelink destination list using SL DRX and/or SL DTX of the terminal;
a sidelink destination list not using SL DRX and/or SL DTX of the terminal;
a sidelink interface QoS profile using SL DRX and/or SL DTX of the terminal;
a sidelink interface QoS profile list using SL DRX and/or SL DTX of the terminal;
a sidelink interface QoS profile not using SL DRX and/or SL DTX of the terminal;
a sidelink interface QoS profile list not using SL DRX and/or SL DTX of the terminal;
a QoS profile list using SL DRX and/or SL DTX under each sidelink destination of the terminal;
a QoS profile list not using SL DRX and/or SL DTX under each sidelink destination of the terminal.

Optionally, the indication information is determined by the terminal according to a transmission configuration (Tx profile) configured by a higher layer of the terminal.

Optionally, the contents of the Tx profile include one of the following:
mapping between a service type and a protocol version of the sidelink interface of the terminal;
mapping between a service and a protocol version of the sidelink interface of the terminal;
a protocol version used when the terminal sends data at the sidelink interface;
mapping between the protocol version and each sidelink destination of the terminal;
mapping between the protocol version and each QoS profile of the sidelink interface of the terminal;
mapping between the protocol version and each QoS profile list of the sidelink interface of the terminal;
mapping between the protocol version and each QoS profile under each sidelink destination of the terminal;
mapping between the protocol version and each QoS profile list under each sidelink destination of the terminal.

Optionally, each QoS profile of the sidelink interface of the terminal is identified by one of the following identification manners:
a ProSe QoS Identifier (PQI) corresponding to the QoS profile is used as an identifier of the QoS profile;
when the terminal configures SL DRX and/or SL DTX for the QoS profile according to a System Information Block (SIB), a position of the QoS profile appearing in the SIB determines an index of the QoS profile, the index is used as the identifier of the QoS profile;
the terminal receives a SIB or a dedicated signaling from the network side device, and uses the index of the QoS profile indicated in the SIB or the dedicated signaling as the identifier of the QoS profile.

Optionally, the indication information is carried in any one of the following manners:
a SidelinkUEInformation message;
a Radio Resource Control (RRC) signaling;
a Media Access Control Control Element (MAC CE).

Optionally, a condition that triggers the terminal to send the indication information to the network side device includes one of the following:
the indication information is carried in the SidelinkUEinformation message, and the terminal satisfies a condition of transmitting the SidelinkUEinformation message;
receiving a Tx profile configured by a higher layer, and generating the indication information by the terminal according to the Tx profile;
a newly arriving QoS flow belongs to a new QoS profile;
a newly arriving QoS flow belongs to a new QoS profile list;
data transmission of a QoS flow belonging to a first QoS profile ends, wherein the first QoS profile is one of all QoS profiles under a first destination of the sidelink interface of the terminal, and the first destination is one of all sidelink destinations of the terminal;
data transmissions of all QoS flows belonging to a first QoS profile list end, the first QoS profile list is one of all QoS profile lists under the second destination of the sidelink interface of the terminal, and the second destination is one of all sidelink destinations of the terminal;
a state of whether the second QoS profile uses SL DRX and/or SL DTX changes, wherein the second QoS profile is one of all QoS profiles under a third destination of the sidelink interface of the terminal, and the third destination is one of all sidelink destinations of the terminal;
a state of whether the second QoS profile list uses SL DRX and/or SL DTX changes, wherein the second QoS profile list is one of all QoS profile lists under a fourth destination of the sidelink interface of the terminal, and the fourth destination is one of all sidelink destinations of the terminal;
being based on the terminal's implementation.

According to the resource scheduling apparatus of the embodiments of the present disclosure, the indication information is sent to the network side device, and the indication information is used to indicate the usage condition of the sidelink SL DRX and/or the SL DTX of the terminal, so that the network side device can reasonably perform scheduling of the sidelink interface on the terminal, and the resource utilization rate of the sidelink interface is improved.

It should be noted that, the division of the units in this embodiments of this application is schematic, but is merely a logical function division, and there may be another division manner in actual implementation. In addition, functional units in the embodiments of this application may be integrated into one processing unit, or each of the units may exist alone physically, or two or more units may be integrated into one unit. The integrated unit may be implemented in the form of hardware, or may be implemented in the form of a software functional unit.

When the integrated unit is implemented in the form of a software functional unit and sold or used as an independent product, the integrated unit may be stored in a processor-readable storage medium. Based on such understanding, an essential part, or a part contributing to the related art, or all or some of the technical solution of the present application may be embodied in the form of a software product, and the computer software product is stored in a storage medium, and includes several instructions for enabling a computer device (which may be a personal computer, a server, or a network side device, etc.) or a processor to perform all or part of the steps of the methods described in the embodiments of this application. The foregoing storage medium includes various media that can store program codes, such as a USB flash disk, a mobile hard disk, a read-only memory (ROM), a random access memory (RAM), a magnetic disk, or an optical disk.

It should be noted that the above-mentioned apparatus provided in the embodiments of the present disclosure can implement all method steps implemented by the foregoing method embodiments, and can achieve the same technical effect, and the same parts between the method embodiments and this embodiment and the beneficial effects of this embodiment are not described in detail herein.

In some embodiments of the present disclosure, a processor-readable storage medium is further provided, the processor-readable storage medium stores program instructions, and the program instructions are configured to cause a processor to perform the following step:
sending indication information to a network side device, wherein the indication information is used to indicate a usage condition of a sidelink interface (SL DRX) and/or an SL DTX of the terminal.

When the program is executed by the processor, all implementations of the foregoing method embodiments applied to the terminal side as shown in FIG. 2 may be implemented, and in order to avoid repetition, details are not described herein again.

As shown in FIG. 6, an embodiment of the present disclosure further provides a network side device. The network side device includes: a memory 620, a transceiver 600, and a processor 610. The memory 620 is configured to store a program. The transceiver 600 is configured to send and receive data under the control of the processor 610; and the processor 610 is configured to read the program in the memory 620 and perform the following operations:
receiving indication information from a terminal through the transceiver; and
performing scheduling of the sidelink interface of the terminal according to the indication information.

In FIG. 6, a bus architecture may include any number of interconnected buses and bridges. Specifically, various circuits including one or more processors represented by the processor 610 and a memory represented by the memory 620 are linked together. The bus architecture may also link together various other circuits, such as peripheral devices, voltage regulators, and power management circuits, etc. which are well known in the art, and therefore are not further described herein. The bus interface provides an interface. The transceiver 600 may be a plurality of elements, i.e. include a transmitter and a receiver, and provide units for communicating with various other apparatuses on a transmission medium, and these transmission media include transmission media such as a wireless channel, a wired channel, and an optical cable. The processor 610 is responsible for managing bus architectures and general processing, and the memory 620 may store data used by the processor 610 when performing operations.

The processor 610 may be a CPU, an ASIC, an FPGA, or a CPLD, and the processor may also adopt a multi-core architecture.

Optionally, the contents of the indication information include one of the following:
whether SL DRX and/or SL DTX is applied at a sidelink interface for the terminal;
whether SL DRX and/or SL DTX is applied for each sidelink destination of the terminal;
whether SL DRX and/or SL DTX is applied to each QoS profile of the sidelink interface of the terminal;
whether each QoS profile list of the sidelink interface of the terminal uses SL DRX and/or SL DTX;
whether SL DRX and/or SL DTX is applied to each QoS profile of each sidelink destination of the terminal;
whether SL DRX and/or SL DTX is applied to each QoS profile list of each sidelink destination of the terminal;
a sidelink destination list using SL DRX and/or SL DTX of the terminal;
a sidelink destination list not using SL DRX and/or SL DTX of the terminal;
a sidelink interface QoS profile using SL DRX and/or SL DTX of the terminal;
a sidelink interface QoS profile list using SL DRX and/or SL DTX of the terminal;
a sidelink interface QoS profile not using SL DRX and/or SL DTX of the terminal;
a sidelink interface QoS profile list not using SL DRX and/or SL DTX of the terminal;
a QoS profile list using SL DRX and/or SL DTX under each sidelink destination of the terminal;
a QoS profile list not using SL DRX and/or SL DTX under each sidelink destination of the terminal.

Optionally, the processor is configured to read program instructions in the memory and perform the following operations:
if it is determined, according to the indication information, that the terminal uses SL DRX and/or SL DTX at a sidelink interface, determining an SL DRX configuration and/or an SL DTX configuration corresponding to each QoS profile or each QoS profile list under each destination of the terminal;
determining, according to the SL DRX configuration and the SL DTX configuration, SL DRX activation time and/or SL DTX activation time corresponding to each QoS profile or each QoS profile list under each destination of the terminal;
scheduling a sidelink interface logical channel belonging to each QoS profile or each QoS profile list under each destination according to the SL DRX activation time and/or the SL DTX activation time corresponding to the QoS profile or the QoS profile list.

Optionally, the processor is configured to read program instructions in the memory and perform the following operations:
if it is determined, according to the indication information, that at least part of sidelink destinations of the terminal uses SL DRX and/or SL DTX, or it is determined, according to the indication information, that a sidelink destination list uses SL DRX and/or SL DTX of the terminal, determining an SL DRX configuration and/or an SL DTX configuration corresponding to each QoS profile or each QoS profile list using SL DRX and/or SL DTX under each destination of the terminal;
determining, according to the SL DRX configuration and/or the SL DTX configuration, SL DRX activation time and/or SL DTX activation time corresponding to each QoS profile or each QoS profile list under each destination using SL DRX and/or SL DTX of the terminal;
scheduling, according to the SL DRX activation time and/or the SL DTX activation time corresponding to each QoS profile or each QoS profile list under each destination using SL DRX and/or SL DTX of the terminal, a sidelink interface logical channel belonging to the QoS profile or the QoS profile list.

Optionally, the processor is configured to read program instructions in the memory and perform the following operations:
if it is determined, according to the indication information, that at least part of QoS profiles or QoS profile lists of the sidelink interface of the terminal uses SL DRX and/or SL DTX, or it is determined, according to the indication information, that a sidelink interface QoS profile or a QoS profile list uses SL DRX and/or SL DTX of the terminal, determining an SL DRX configuration and/or an SL DTX configuration corresponding to each QoS profile or each QoS profile list using SL DRX and/or SL DTX under each destination of the terminal;
determining, according to the SL DRX configuration and/or the SL DTX configuration, SL DRX activation time and/or SL DTX activation time corresponding to each QoS profile or each QoS profile list using SL DRX and/or SL DTX under each destination of the terminal;
scheduling, according to the SL DRX activation time and/or the SL DTX activation time corresponding to each QoS profile or each QoS profile list using SL DRX and/or SL DTX under each destination of the terminal, a sidelink interface logical channel belonging to the QoS profile or the QoS profile list.

Optionally, the processor is configured to read program instructions in the memory and perform the following operations:
if it is determined, according to the indication information, that part of QoS profiles or QoS profile lists under at least a part of sidelink destinations of the terminal uses SL DRX and/or SL DTX, or a QoS profile list using SL DRX and/or SL DTX under each sidelink destination of the terminal is determined according to the indication information, determining an SL DRX configuration and/or an SL DTX configuration corresponding to the QoS profile or the QoS profile list under the destination using SL DRX and/or SL DTX of the terminal;
according to the SL DRX configuration and/or the SL DTX configuration, determining the SL DRX activation time and/or the SL DTX activation time corresponding to the QoS profile or the QoS profile list under the destination using SL DRX and/or SL DTX of the terminal;
scheduling, according to the SL DRX activation time and/or the SL DTX activation time corresponding to the QoS profile or the QoS profile list under the destination using SL DRX and/or SL DTX of the terminal, sidelink interface logical channels belonging to the QoS profile or the QoS profile list.

Optionally, the processor is configured to read program instructions in the memory and perform the following operations:
if it is determined, according to the indication information, that SL DRX and/or SL DTX is not applied at the sidelink interface of the terminal, scheduling any sidelink interface logical channel belonging to the terminal by using all available resources of the sidelink interface;
if it is determined, according to the indication information, that SL DRX and/or SL DTX is not applied to at least part of the sidelink destinations of the terminal, or a sidelink destination list not using SL DRX and/or SL DTX is determined for the terminal according to the indication information, scheduling a sidelink interface logical channel under each destination not using SL DRX and/or SL DTX and belonging to the terminal, by using all available resources of the sidelink interface;
if it is determined, according to the indication information, that at least part of the QoS profiles or the QoS profile lists of SL DRX and/or SL DTX is not applied at the sidelink interface of the terminal, or it is determined, according to the indication information, that part of the QoS profiles or the QoS profile lists under the SL DRX and/or SL DTX is not applied to at least part of the sidelink destinations of the terminal, then scheduling, by using all available resources of the sidelink interface, the sidelink interface logical channel belonging to the QoS profile or the QoS profile list under the destination of the terminal and not using SL DRX and/or SL DTX;
if a sidelink interface QoS profile not using SL DRX and/or SL DTX is determined according to the indication information, scheduling the sidelink interface logical channel belonging to the QoS profile not using SL DRX and/or SL DTX under each destination of the terminal, by using all available resources of the sidelink interface;
if a sidelink interface QoS profile list that does not use SL DRX and/or SL DTX is determined according to the indication information, or a QoS profile list not using SL DRX and/or SL DTX under each sidelink destination of the terminal is determined according to the indication information, scheduling, by using all available resources of the sidelink interface, a sidelink interface logical channel belonging to a QoS profile list not using SL DRX and/or SL DTX under each destination of the terminal.

According to the network side device of the embodiments of the present disclosure, the network side device receives the indication information sent by the terminal, and executes the scheduling of the sidelink interface of the terminal according to the indication information, so that the scheduling of the sidelink interface can be reasonably performed on the terminal, and the resource utilization rate of the sidelink interface is improved.

As shown in FIG. 7, some embodiments of the present disclosure further provide a resource scheduling apparatus. The apparatus includes:
a receiving unit 701, used to receive indication information from a terminal;
a scheduling unit 702, used to perform scheduling of a sidelink interface of the terminal according to the indication information.

Optionally, the contents of the indication information include one of the following:
whether SL DRX and/or SL DTX is applied at a sidelink interface for the terminal;
whether SL DRX and/or SL DTX is applied for each sidelink destination of the terminal;
whether SL DRX and/or SL DTX is applied to each QoS profile of the sidelink interface of the terminal;
whether SL DRX and/or SL DTX is applied to each QoS profile list of the sidelink interface of the terminal;
whether SL DRX and/or SL DTX is applied to each QoS profile of each sidelink destination of the terminal;
whether SL DRX and/or SL DTX is applied to each QoS profile list of each sidelink destination of the terminal;
a sidelink destination list using SL DRX and/or SL DTX of the terminal;
a sidelink destination list not using SL DRX and/or SL DTX of the terminal;
a sidelink interface QoS profile using SL DRX and/or SL DTX of the terminal;
a sidelink interface QoS profile list using SL DRX and/or SL DTX of the terminal;
a sidelink interface QoS profile not using SL DRX and/or SL DTX of the terminal;
a sidelink interface QoS profile list not using SL DRX and/or SL DTX of the terminal;
a QoS profile list using SL DRX and/or SL DTX under each sidelink destination of the terminal;
a QoS profile list not using SL DRX and/or SL DTX under each sidelink destination of the terminal.

Optionally, the scheduling unit 702 is specifically used to:
if it is determined, according to the indication information, that the terminal uses SL DRX and/or SL DTX at a sidelink interface, determine an SL DRX configuration and/or an SL DTX configuration corresponding to each QoS profile or each QoS profile list under each destination of the terminal;
determine, according to the SL DRX configuration and the SL DTX configuration, SL DRX activation time and/or SL DTX activation time corresponding to each QoS profile or each QoS profile list under each destination of the terminal;
schedule a sidelink interface logical channel belonging to each QoS profile or each QoS profile list under each destination according to the SL DRX activation time and/or the SL DTX activation time corresponding to the QoS profile or the QoS profile list.

Optionally, the scheduling unit 702 is specifically used to:
if it is determined, according to the indication information, that at least part of sidelink destinations of the terminal uses SL DRX and/or SL DTX, or it is determined, according to the indication information, that a sidelink destination list uses SL DRX and/or SL DTX of the terminal, determine an SL DRX configuration and/or an SL DTX configuration corresponding to each QoS profile or each QoS profile list using SL DRX and/or SL DTX under each destination of the terminal;
determine, according to the SL DRX configuration and/or the SL DTX configuration, SL DRX activation time and/or SL DTX activation time corresponding to each QoS profile or each QoS profile list under each destination using SL DRX and/or SL DTX of the terminal;
schedule, according to the SL DRX activation time and/or the SL DTX activation time corresponding to each QoS profile or each QoS profile list under each destination using SL DRX and/or SL DTX of the terminal, a sidelink interface logical channel belonging to the QoS profile or the QoS profile list.

Optionally, the scheduling unit 702 is specifically used to:
if it is determined, according to the indication information, that at least part of QoS profiles or QoS profile lists of the sidelink interface of the terminal uses SL DRX and/or SL DTX, or it is determined, according to the indication information, that a sidelink interface QoS profile or a QoS profile list uses SL DRX and/or SL DTX of the terminal, determine an SL DRX configuration and/or an SL DTX configuration corresponding to each QoS profile or each QoS profile list using SL DRX and/or SL DTX under each destination of the terminal;
determine, according to the SL DRX configuration and/or the SL DTX configuration, SL DRX activation time and/or SL DTX activation time corresponding to each QoS profile or each QoS profile list using SL DRX and/or SL DTX under each destination of the terminal;
schedule, according to the SL DRX activation time and/or the SL DTX activation time corresponding to each QoS profile or each QoS profile list using SL DRX and/or SL DTX under each destination of the terminal, a sidelink interface logical channel belonging to the QoS profile or the QoS profile list.

Optionally, the scheduling unit 702 is specifically used to:
if it is determined, according to the indication information, that part of QoS profiles or QoS profile lists under at least a part of sidelink destinations of the terminal uses SL DRX and/or SL DTX, or a QoS profile list using SL DRX and/or SL DTX under each sidelink destination of the terminal is determined according to the indication information, determine an SL DRX configuration and/or an SL DTX configuration corresponding to the QoS profile or the QoS profile list under the destination using SL DRX and/or SL DTX of the terminal;
according to the SL DRX configuration and/or the SL DTX configuration, determine the SL DRX activation time and/or the SL DTX activation time corresponding to the QoS profile or the QoS profile list under the destination using SL DRX and/or SL DTX of the terminal;
schedule, according to the SL DRX activation time and/or the SL DTX activation time corresponding to the QoS profile or the QoS profile list under the destination using SL DRX and/or SL DTX of the terminal, sidelink interface logical channels belonging to the QoS profile or the QoS profile list.

Optionally, the scheduling unit 702 is specifically used to:
if it is determined, according to the indication information, that SL DRX and/or SL DTX is not applied at the sidelink interface of the terminal, schedule any sidelink interface logical channel belonging to the terminal by using all available resources of the sidelink interface;
if it is determined, according to the indication information, that SL DRX and/or SL DTX is not applied to at least part of the sidelink destinations of the terminal, or a sidelink destination list not using SL DRX and/or SL DTX is determined for the terminal according to the indication information, schedule a sidelink interface logical channel under each destination not using SL DRX and/or SL DTX and belonging to the terminal, by using all available resources of the sidelink interface;
if it is determined, according to the indication information, that at least part of the QoS profiles or the QoS profile lists of SL DRX and/or SL DTX is not applied at the sidelink interface of the terminal, or it is determined, according to the indication information, that part of the QoS profiles or the QoS profile lists under the SL DRX and/or SL DTX is not applied to at least part of the sidelink destinations of the terminal, then schedule, by using all available resources of the sidelink interface, the sidelink interface logical channel belonging to the QoS profile or the QoS profile list under the destination of the terminal and not using SL DRX and/or SL DTX;
if a sidelink interface QoS profile not using SL DRX and/or SL DTX is determined according to the indication information, schedule the sidelink interface logical channel belonging to the QoS profile not using SL DRX and/or SL DTX under each destination of the terminal, by using all available resources of the sidelink interface;
if a sidelink interface QoS profile list that does not use SL DRX and/or SL DTX is determined according to the indication information, or a QoS profile list not using SL DRX and/or SL DTX under each sidelink destination of the terminal is determined according to the indication information, schedul, by using all available resources of the sidelink interface, a sidelink interface logical channel belonging to a QoS profile list not using SL DRX and/or SL DTX under each destination of the terminal.

According to the resource scheduling apparatus of the embodiments of the present disclosure, the scheduling of the sidelink interface for the terminal is performed according to the indication information sent by the terminal, so that the scheduling of the sidelink interface can be reasonably performed on the terminal, and the resource utilization rate of the sidelink interface is improved.

It should be noted that, the division of the units in this embodiment of this application is schematic, but is merely a logical function division, and there may be another division manner in actual implementation. In addition, functional units in the embodiments of this application may be integrated into one processing unit, or each of the units may exist alone physically, or two or more units may be integrated into one unit. The integrated unit may be implemented in the form of hardware, or may be implemented in the form of a software functional unit.

When the integrated unit is implemented in the form of a software functional unit and sold or used as an independent product, the integrated unit may be stored in a processor-readable storage medium. Based on such understanding, an essential part, or a part contributing to the related art, or all or some of the technical solution of the present application may be embodied in the form of a software product, and the computer software product is stored in a storage medium, and includes several instructions for enabling a computer device (which may be a personal computer, a server, or a network side device, etc.) or a processor to perform all or part of the steps of the methods described in the embodiments of this application. The foregoing storage medium includes various media that can store program codes, such as a USB flash disk, a mobile hard disk, a read-only memory (ROM), a random access memory (RAM), a magnetic disk, or an optical disk.

It should be noted that the above-mentioned apparatus provided in the embodiments of the present disclosure can implement all method steps implemented by the foregoing method embodiments, and can achieve the same technical effect, and the same parts between the method embodiments and this embodiment and the beneficial effects of this embodiment are not described in detail herein.

In some embodiments of the present disclosure, a processor-readable storage medium is further provided, the processor-readable storage medium stores program instructions, and the program instructions are configured to cause a processor to perform the following steps:
receiving, by the network side device, indication information sent by a terminal
performing scheduling of the sidelink interface of the terminal according to the indication information by the network side device.

When the program is executed by the processor, all implementations of the foregoing method embodiments applied to the network side device side shown in FIG. 3 may be implemented, and in order to avoid repetition, details are not described herein again.

The technical solutions provided in the embodiments of this application may be applied to a variety of systems, especially a fifth generation mobile communication (5G) system. For example, the applicable system may be a Global System of Mobile Communication (GSM) system, a Code Division Multiple Access (CDMA) system, a Wideband Code Division Multiple Access (WCDMA) system, a General Packet Radio Service (GPRS) system, a Long Term Evolution (LTE) system, a LTE Frequency Division Duplex (FDD) system, a LTE Time Division Duplex (TDD) system, a Long Term Evolution Advanced (LTE-A) system, a Universal Mobile Telecommunication System (UMTS), a Worldwide Interoperability for Microwave Access (WiMAX) system, a 5G new radio (NR) system, and the like. Each system includes a terminal device and a network side device. The system may further include a core network portion, such as an evolved packet system (EPS), a 5G system (5G System, 5 GS), etc.

The terminal device according to the embodiments of the present application may be a device that provides voice and/or data connectivity to a user, a handheld device having a wireless connection function, or other processing devices connected to a wireless modem, etc. In different systems, the names of the terminal device may also be different, for example, in a 5G system, the terminal device may be referred to as a user equipment (UE). A wireless terminal device may communicate with one or more core networks (CN) via a radio access network (RAN), and may be a mobile terminal device, such as a mobile phone (or referred to as a "cellular" phone) and a computer with a mobile terminal device, for example, may be a portable, pocket, handheld, computer built-in or vehicle-mounted mobile device that exchanges language and/or data with the radio access network. For example, devices such as a Personal Communication Service (PCS) phone, a cordless telephone, a Session Initiation Protocol (SIP) phone, a Wireless Local Loop (WLL) station, a Personal Digital Assistant (PDA), etc. The wireless terminal device may also be referred to as a system, a subscriber unit, a subscriber station, a mobile station, a mobile station, a remote station, an access point, a remote terminal, an access terminal, a user terminal, a user agent, and a user device

The network side device according to the embodiments of this application may be a base station, and the base station may include a plurality of cells that provide services for the terminal. According to different specific application occasions, a base station may also be referred to as an access point, or may be a device in an access network that communicates with a wireless terminal device through one or more sectors on an air interface, or other names. The network side device may be configured to replace the received air frame with the Internet Protocol (IP) packets to serve as a router between the wireless terminal device and the remaining portion of the access network, wherein the remaining portion of the access network may include an IP communication network. The network side device may also coordinate attribute management of the air interface. For example, the network side device involved in this embodiment of this application may be a network side device (BTS) in a Global System for Mobile Communications (GSM) or a Code Division Multiple Access system (CDMA), or may be a network side device (NodeB) in a Wide-Band Code Division Multiple Access (WCDMA), or may be an evolved network side device (evolutional Node B, eNB or e-NodeB) in a Long Term Evolution (LTE) system, a 5G base station (gNB) in a next generation system, or a home evolved Node B (HeNB), a relay node, a Femto, a pico base station, etc. which are not limited in this embodiment of this application. In some network structures, the network side device may include a centralized unit (CU) node and a distributed unit (DU) node, and the centralized unit and the distribution unit may also be geographically separated.

Multi-input multi-output (MIMO) transmission may be performed between the network side device and the terminal device by using one or more antennas, and the MIMO transmission may be single-user MIMO (SU-MIMO) or multiple-user MIMO (MU-MIMO). The MIMO transmission may be a two-dimensional multiple-input multiple-output (2D-MIMO), a three-dimensional multiple-input multiple-output (3D-MIMO), a full-dimensional multiple-input multiple-output (Full Dimension MIMO, FD-MIMO), or a massive multiple-input multiple-output (Massive-MIMO) according to the pattern and the number of combinations of root antennas, or may be diversity transmission or precoding transmission or beamforming transmission, etc.

Those skilled in the art should understand that the embodiments of the present application may be provided as a method, a system, or a program product. Therefore, the present application may take the form of an entirely hardware embodiment, an entirely software embodiment, or an embodiment combining software and hardware. Moreover, the present application may take the form of a program product implemented on one or more computer-usable storage media (including but not limited to a disk memory and an optical memory, etc.) including computer-usable program codes.

The present application is described with reference to a flowchart and/or a block diagram of a method, a device (system), and a program product according to the embodiments of the present application. It should be understood that each flow and/or each block in the flowcharts and/or block diagrams, and combinations of flows and/or blocks in the flowcharts and/or block diagrams, can be implemented by computer-executable instructions. These computer-executable instructions may be provided to a processor of a general purpose computer, a special purpose computer, an embedded processor, or other programmable data processing device to generate a machine such that instructions executed by a processor of the computer or other programmable data processing device generate means for implementing functions specified in one or more flows of the flowcharts and/or one or more blocks of the block diagrams.

These processor-executable instructions may also be stored in a processor-readable memory that can direct a computer or other programmable data processing device to operate in a particular manner such that the instructions stored in the processor-readable memory produce a product that includes an instruction device that implements the functions specified in one or more flows of the flowcharts and/or one or more blocks of the block diagrams.

These processor-executable instructions may also be loaded onto a computer or other programmable data processing device such that a series of operational steps are performed on a computer or other programmable device to produce a computer-implemented process, such that the instructions executed on the computer or other programmable device provide steps for implementing the functions specified in one or more flows of the flowcharts and/or one or more blocks of the block diagrams.

It should be noted that, it should be understood that the division of the above modules is merely a division of a logical function, and all or some of the modules may be integrated onto one physical entity during actual implementation, or may be physically separated. In addition, these modules may all be implemented in the form of software invoked by a processing element, or may all be implemented in the form of hardware; or some modules may be implemented in the form of a processing element invoking software, and some of the modules are implemented in the form of hardware. For example, the determining module may be a separately set processing element, or may be integrated in a certain chip of the foregoing apparatus, and in addition, the determining module may also be stored in a memory of the apparatus in the form of program codes, and a certain processing element of the apparatus invokes and executes the functions of the determining module. Implementations of other modules are similar. In addition, all or part of these modules may be integrated together, or may be implemented independently. The processing element described herein may be an integrated circuit having a signal processing capability. In an implementation process, each step of the above-mentioned method or each of the above modules may be completed by means of an integrated logic circuit of hardware in the processor element or an instruction in a software form.

For example, each module, unit, subunit, or sub-module may be one or more integrated circuits configured to implement the above method, for example, one or more application specific integrated circuits (ASICs), or one or more microprocessors (digital signal processors, DSPs), or one or more field programmable gate arrays (FPGAs), etc. For another example, when a certain module is implemented in the form of a processing element scheduling program codes, the processing element may be a general-purpose processor, for example, a central processing unit (CPU) or another processor that may invoke a program code. For another example, these modules may be integrated together and implemented in the form of a system-on-a-chip (SOC).

The terms "first," "second, "and the like in the specification and claims of the present disclosure are used to distinguish similar objects, and do not need to be used to describe a specific order or sequence. It should be understood that the terms used in this way may be interchanged under appropriate circumstances so that the embodiments of the disclosure described herein, for example, are implemented in an order other than those illustrated or described herein. Furthermore, the terms "include" and "have" and any variations thereof are intended to cover non-exclusive inclusion, for example, processes, methods, systems, products, or devices that include a series of steps or units are not necessarily limited to those steps or units clearly listed, but may include other steps or units not expressly listed or inherent to these processes, methods, products, or devices. In addition, the description and the claims use "and/or" indicate at least one of the connected objects, such as A and/or B and/or C, indicating that there are cases that A exists alone, B exists alone, C exists alone, and both A and B exist, both B and C exist, both A and C exist, and all A, B and C exist. Similarly, the use of "at least one of A and B" in this specification and in the claims should be understood as "a single A, a separate B, or both A and B".

The embodiments of the present disclosure are described above with reference to the accompanying drawings, but the present disclosure is not limited to the specific embodiments described above, and the specific embodiments described above are merely illustrative rather than limiting, and a person of ordinary skill in the art can also make many form amendment without departing from the spirit of the present disclosure and the protection scope of the claims, which are all within the protection scope of the present disclosure.

## Claims

1. An information transmission method, comprising:
sending indication information to a network side device by a terminal, wherein the indication information is used to indicate a usage condition of a SideLink Discontinuous Reception (SL DRX) and/or SideLink Discontinuous Transmission (SL DTX) of the terminal.

2. The method according to claim 1, wherein contents of the indication information comprises one of following:
whether SL DRX and/or SL DTX is applied at a sidelink interface for the terminal;
whether SL DRX and/or SL DTX is applied for each sidelink destination of the terminal;
whether SL DRX and/or SL DTX is applied for each Quality of Service (QoS) profile corresponding to each QoS of the terminal;
whether SL DRX and/or SL DTX is applied to each QoS profile list of a sidelink interface of the terminal;
whether SL DRX and/or SL DTX is applied to each QoS profile of each sidelink destination of the terminal;
whether SL DRX and/or SL DTX is applied to each QoS profile list of each sidelink destination of the terminal;
a sidelink destination list using SL DRX and/or SL DTX of the terminal;
a sidelink destination list not using SL DRX and/or SL DTX of the terminal;
a sidelink interface QoS profile using SL DRX and/or SL DTX of the terminal;
a sidelink interface QoS profile list using SL DRX and/or SL DTX of the terminal;
a sidelink interface QoS profile not using SL DRX and/or SL DTX of the terminal;
a sidelink interface QoS profile list not using SL DRX and/or SL DTX of the terminal;
a QoS profile list using SL DRX and/or SL DTX under each sidelink destination of the terminal;
a QoS profile list not using SL DRX and/or SL DTX under each sidelink destination of the terminal.

3. The method according to claim 1, wherein the indication information is determined by the terminal according to a transmission profile (Tx profile) configured by a higher layer of the terminal.

4. The method according to claim 3, wherein contents of the Tx profile comprises one of following:
mapping between a protocol release and a service type of a sidelink interface of the terminal;
mapping between a protocol release and a service of a sidelink interface of the terminal;
a protocol release used when the terminal sends data at a sidelink interface;
mapping between a protocol release and each sidelink destination of the terminal;
mapping between a protocol release and each QoS profile of a sidelink interface of the terminal;
mapping between a protocol release and each QoS profile list of a sidelink interface of the terminal;
mapping between a protocol release and each QoS profile under each sidelink destination of the terminal;
mapping between a protocol release and each QoS profile list under each sidelink destination of the terminal.

5. The method according to claim 2 or 4, wherein each QoS profile of the sidelink interface of the terminal is identified by one of following identification manners:
using a Proximity-based Service Quality of Service Identifier (PQI) corresponding to the QoS profile as an identifier of the QoS profile;
when the terminal configures SL DRX and/or SL DTX for the QoS profile according to a System Information Block (SIB), determining a position of the QoS profile appearing in the SIB as an index of the QoS profile, using the index as an identifier of the QoS profile;
receiving a SIB or a dedicated signaling from a network side device by the terminal, and using, as an identifier of the QoS profile, an index of the QoS profile indicated in the SIB or the dedicated signaling.

6. The method according to claim 1, wherein the indication information is carried in any one of following:
a SidelinkUEInformation message;
a Radio Resource Control (RRC) signaling;
a Media Access Control Control Element (MAC CE).

7. The method according to claim 2, wherein a condition that triggers the terminal to send the indication information to the network side device comprises one of following:
the indication information is carried in a SidelinkUEinformation message, and the terminal satisfies a condition of transmitting the SidelinkUEinformation message;
a Transmission (Tx) profile configured by a higher layer is received, and the indication information is generated by the terminal according to the Tx profile;
a newly arriving Quality of Service (QoS) flow belongs to a new QoS profile;
a newly arriving QoS flow belongs to a new QoS profile list;
data transmission of a QoS flow belonging to a first QoS profile ends, wherein the first QoS profile is one of all QoS profiles under a first destination of a sidelink interface of the terminal, and the first destination is one of all sidelink destinations of the terminal;
data transmissions of all QoS flows belonging to a first QoS profile list end, wherein the first QoS profile list is one of all QoS profile lists under a second destination of a sidelink interface of the terminal, and the second destination is one of all sidelink destinations of the terminal;
a state of whether a second QoS profile uses SL DRX and/or SL DTX changes, wherein the second QoS profile is one of all QoS profiles under a third destination of a sidelink interface of the terminal, and the third destination is one of all sidelink destinations of the terminal;
a state of whether a second QoS profile list uses SL DRX and/or SL DTX changes, wherein the second QoS profile list is one of all QoS profile lists under a fourth destination of a sidelink interface of the terminal, and the fourth destination is one of all sidelink destinations of the terminal;
implementation based on the terminal.

8. A resource scheduling method, comprising:
receiving indication information from a terminal by a network side device;
performing scheduling of a sidelink interface of the terminal according to the indication information by the network side device.

9. The method according to claim 8, wherein contents of the indication information comprises one of following:
whether SL DRX and/or SL DTX is applied at a sidelink interface for the terminal;
whether SL DRX and/or SL DTX is applied for each sidelink destination of the terminal;
whether SL DRX and/or SL DTX is applied for each Quality of Service (QoS) profile corresponding to each QoS of the terminal;
whether SL DRX and/or SL DTX is applied to each QoS profile list of a sidelink interface of the terminal;
whether SL DRX and/or SL DTX is applied to each QoS profile of each sidelink destination of the terminal;
whether SL DRX and/or SL DTX is applied to each QoS profile list of each sidelink destination of the terminal;
a sidelink destination list using SL DRX and/or SL DTX of the terminal;
a sidelink destination list not using SL DRX and/or SL DTX of the terminal;
a sidelink interface QoS profile using SL DRX and/or SL DTX of the terminal;
a sidelink interface QoS profile list using SL DRX and/or SL DTX of the terminal;
a sidelink interface QoS profile not using SL DRX and/or SL DTX of the terminal;
a sidelink interface QoS profile list not using SL DRX and/or SL DTX of the terminal;
a QoS profile list using SL DRX and/or SL DTX under each sidelink destination of the terminal;
a QoS profile list not using SL DRX and/or SL DTX under each sidelink destination of the terminal.

10. The method according to claim 9, wherein performing scheduling of the sidelink interface of the terminal according to the indication information by the network side device comprises:
if it is determined, according to the indication information, that the terminal uses SL DRX and/or SL DTX at a sidelink interface, determining an SL DRX configuration and/or an SL DTX configuration corresponding to each QoS profile or each QoS profile list under each destination of the terminal;
determining, according to the SL DRX configuration and the SL DTX configuration, SL DRX activation time and/or SL DTX activation time corresponding to each QoS profile or each QoS profile list under each destination of the terminal;
scheduling a sidelink interface logical channel belonging to each QoS profile or each QoS profile list under each destination according to the SL DRX activation time and/or the SL DTX activation time corresponding to the QoS profile or the QoS profile list.

11. The method according to claim 9, wherein performing scheduling of the sidelink interface of the terminal according to the indication information by the network side device comprises:
if it is determined, according to the indication information, that at least part of sidelink destinations of the terminal uses SL DRX and/or SL DTX, or it is determined, according to the indication information, that a sidelink destination list uses SL DRX and/or SL DTX of the terminal, determining an SL DRX configuration and/or an SL DTX configuration corresponding to each QoS profile or each QoS profile list using SL DRX and/or SL DTX under each destination of the terminal;
determining, according to the SL DRX configuration and/or the SL DTX configuration, SL DRX activation time and/or SL DTX activation time corresponding to each QoS profile or each QoS profile list under each destination using SL DRX and/or SL DTX of the terminal;
scheduling, according to the SL DRX activation time and/or the SL DTX activation time corresponding to each QoS profile or each QoS profile list under each destination using SL DRX and/or SL DTX of the terminal, a sidelink interface logical channel belonging to the QoS profile or the QoS profile list.

12. The method according to claim 9, wherein performing scheduling of the sidelink interface of the terminal according to the indication information by the network side device comprises:
if it is determined, according to the indication information, that at least part of QoS profiles or QoS profile lists of the sidelink interface of the terminal uses SL DRX and/or SL DTX, or it is determined, according to the indication information, that a sidelink interface QoS profile or a QoS profile list uses SL DRX and/or SL DTX of the terminal, determining an SL DRX configuration and/or an SL DTX configuration corresponding to each QoS profile or each QoS profile list using SL DRX and/or SL DTX under each destination of the terminal;
determining, according to the SL DRX configuration and/or the SL DTX configuration, SL DRX activation time and/or SL DTX activation time corresponding to each QoS profile or each QoS profile list using SL DRX and/or SL DTX under each destination of the terminal;
scheduling, according to the SL DRX activation time and/or the SL DTX activation time corresponding to each QoS profile or each QoS profile list using SL DRX and/or SL DTX under each destination of the terminal, a sidelink interface logical channel belonging to the QoS profile or the QoS profile list.

13. The method according to claim 9, wherein performing scheduling of the sidelink interface of the terminal according to the indication information by the network side device comprises:
if it is determined, according to the indication information, that part of QoS profiles or QoS profile lists under at least a part of sidelink destinations of the terminal uses SL DRX and/or SL DTX, or a QoS profile list using SL DRX and/or SL DTX under each sidelink destination of the terminal is determined according to the indication information, determining an SL DRX configuration and/or an SL DTX configuration corresponding to the QoS profile or the QoS profile list under the destination using SL DRX and/or SL DTX of the terminal;
according to the SL DRX configuration and/or the SL DTX configuration, determining SL DRX activation time and/or SL DTX activation time corresponding to the QoS profile or the QoS profile list under the destination using SL DRX and/or SL DTX of the terminal;
scheduling, according to the SL DRX activation time and/or the SL DTX activation time corresponding to the QoS profile or the QoS profile list under the destination using SL DRX and/or SL DTX of the terminal, sidelink interface logical channels belonging to the QoS profile or the QoS profile list.

14. The method according to claim 9, wherein performing scheduling of the sidelink interface of the terminal according to the indication information by the network side device comprises:
if it is determined, according to the indication information, that SL DRX and/or SL DTX is not applied at the sidelink interface of the terminal, scheduling any sidelink interface logical channel belonging to the terminal by using all available resources of the sidelink interface;
if it is determined, according to the indication information, that SL DRX and/or SL DTX is not applied to at least part of the sidelink destinations of the terminal, or a sidelink destination list not using SL DRX and/or SL DTX is determined for the terminal according to the indication information, scheduling a sidelink interface logical channel under each destination not using SL DRX and/or SL DTX and belonging to the terminal, by using all available resources of the sidelink interface;
if it is determined, according to the indication information, that SL DRX and/or SL DTX is not applied to at least part of QoS profiles or QoS profile lists of the sidelink interface of the terminal, or it is determined, according to the indication information, that SL DRX and/or SL DTX is not applied to part of QoS profiles or QoS profile lists under the at least part of sidelink destinations of the terminal, then scheduling, by using all available resources of the sidelink interface, a sidelink interface logical channel belonging to the QoS profile or the QoS profile list under a destination not using SL DRX and/or SL DTX of the terminal;
if a sidelink interface QoS profile not using SL DRX and/or SL DTX is determined according to the indication information, scheduling a sidelink interface logical channel belonging to the QoS profile not using SL DRX and/or SL DTX under each destination of the terminal, by using all available resources of the sidelink interface;
if a sidelink interface QoS profile list that does not use SL DRX and/or SL DTX is determined according to the indication information, or a QoS profile list not using SL DRX and/or SL DTX under each sidelink destination of the terminal is determined according to the indication information, scheduling, by using all available resources of the sidelink interface, a sidelink interface logical channel belonging to a QoS profile list not using SL DRX and/or SL DTX under each destination of the terminal.

15. A terminal, comprising:
a memory, a transceiver, and a processor,
wherein the memory is configured to store a program instruction; the transceiver is configured to send and receive data under control of the processor; and the processor is configured to read the program instruction in the memory and execute following operations:
sending indication information to a network side device through the transceiver, wherein the indication information is used to indicate a usage condition of a SideLink Discontinuous Reception (SL DRX) and/or SideLink Discontinuous Transmission (SL DTX) of the terminal.

16. The terminal according to claim 15, wherein contents of the indication information comprises one of following:
whether SL DRX and/or SL DTX is applied at a sidelink interface for the terminal;
whether SL DRX and/or SL DTX is applied for each sidelink destination of the terminal;
whether SL DRX and/or SL DTX is applied for each Quality of Service (QoS) profile corresponding to each QoS of the terminal;
whether SL DRX and/or SL DTX is applied to each QoS profile list of a sidelink interface of the terminal;
whether SL DRX and/or SL DTX is applied to each QoS profile of each sidelink destination of the terminal;
whether SL DRX and/or SL DTX is applied to each QoS profile list of each sidelink destination of the terminal;
a sidelink destination list using SL DRX and/or SL DTX of the terminal;
a sidelink destination list not using SL DRX and/or SL DTX of the terminal;
a sidelink interface QoS profile using SL DRX and/or SL DTX of the terminal;
a sidelink interface QoS profile list using SL DRX and/or SL DTX of the terminal;
a sidelink interface QoS profile not using SL DRX and/or SL DTX of the terminal;
a sidelink interface QoS profile list not using SL DRX and/or SL DTX of the terminal;
a QoS profile list using SL DRX and/or SL DTX under each sidelink destination of the terminal;
a QoS profile list not using SL DRX and/or SL DTX under each sidelink destination of the terminal.

17. The terminal according to claim 15, wherein the indication information is determined by the terminal according to a transmission profile (Tx profile) configured by a higher layer of the terminal.

18. The terminal according to claim 17, wherein contents of the Tx profile comprises one of following:
mapping between a protocol release and a service type of a sidelink interface of the terminal;
mapping between a protocol release and a service of a sidelink interface of the terminal;
a protocol release used when the terminal sends data at a sidelink interface;
mapping between a protocol release and each sidelink destination of the terminal;
mapping between a protocol release and each QoS profile of a sidelink interface of the terminal;
mapping between a protocol release and each QoS profile list of a sidelink interface of the terminal;
mapping between a protocol release and each QoS profile under each sidelink destination of the terminal;
mapping between a protocol release and each QoS profile list under each sidelink destination of the terminal.

19. The terminal according to claim 16 or 18, wherein each QoS profile of the sidelink interface of the terminal is identified by one of following identification manners:
using a Proximity-based Service Quality of Service Identifier (PQI) corresponding to the QoS profile as an identifier of the QoS profile;
when the terminal configures SL DRX and/or SL DTX for the QoS profile according to a System Information Block (SIB), determining a position of the QoS profile appearing in the SIB as an index of the QoS profile, using the index as an identifier of the QoS profile;
receiving a SIB or a dedicated signaling from a network side device by the terminal, and using, as an identifier of the QoS profile, an index of the QoS profile indicated in the SIB or the dedicated signaling.

20. The terminal according to claim 15, wherein the indication information is carried in any one of following:
a SidelinkUEInformation message;
a Radio Resource Control (RRC) signaling;
a Media Access Control Control Element (MAC CE).

21. The terminal according to claim 16, wherein a condition that triggers the terminal to send the indication information to the network side device comprises one of following:
the indication information is carried in a SidelinkUEinformation message, and the terminal satisfies a condition of transmitting the SidelinkUEinformation message;
a Transmission (Tx) profile configured by a higher layer is received, and the indication information is generated by the terminal according to the Tx profile;
a newly arriving Quality of Service (QoS) flow belongs to a new QoS profile;
a newly arriving QoS flow belongs to a new QoS profile list;
data transmission of a QoS flow belonging to a first QoS profile ends, wherein the first QoS profile is one of all QoS profiles under a first destination of a sidelink interface of the terminal, and the first destination is one of all sidelink destinations of the terminal;
data transmissions of all QoS flows belonging to a first QoS profile list end, wherein the first QoS profile list is one of all QoS profile lists under a second destination of a sidelink interface of the terminal, and the second destination is one of all sidelink destinations of the terminal;
a state of whether a second QoS profile uses SL DRX and/or SL DTX changes, wherein the second QoS profile is one of all QoS profiles under a third destination of a sidelink interface of the terminal, and the third destination is one of all sidelink destinations of the terminal;
a state of whether a second QoS profile list uses SL DRX and/or SL DTX changes, wherein the second QoS profile list is one of all QoS profile lists under a fourth destination of a sidelink interface of the terminal, and the fourth destination is one of all sidelink destinations of the terminal;
implementation based on the terminal.

22. An information transmission apparatus, comprising:
a sending unit, used to send indication information to a network side device by a terminal, wherein the indication information is used to indicate a usage condition of a SideLink Discontinuous Reception (SL DRX) and/or SideLink Discontinuous Transmission (SL DTX) of the terminal.

23. A network side device, comprising:
a memory, a transceiver, and a processor,
wherein the memory is configured to store a program; the transceiver is configured to send and receive data under control of the processor; the processor is configured to read the program in the memory and execute following operations:
receiving indication information from a terminal through the transceiver;
performing scheduling of a sidelink interface of the terminal according to the indication information by a network side device.

24. The network side device according to claim 23, wherein contents of the indication information comprises one of following:
whether SL DRX and/or SL DTX is applied at a sidelink interface for the terminal;
whether SL DRX and/or SL DTX is applied for each sidelink destination of the terminal;
whether SL DRX and/or SL DTX is applied for each Quality of Service (QoS) profile corresponding to each QoS of the terminal;
whether SL DRX and/or SL DTX is applied to each QoS profile list of a sidelink interface of the terminal;
whether SL DRX and/or SL DTX is applied to each QoS profile of each sidelink destination of the terminal;
whether SL DRX and/or SL DTX is applied to each QoS profile list of each sidelink destination of the terminal;
a sidelink destination list using SL DRX and/or SL DTX of the terminal;
a sidelink destination list not using SL DRX and/or SL DTX of the terminal;
a sidelink interface QoS profile using SL DRX and/or SL DTX of the terminal;
a sidelink interface QoS profile list using SL DRX and/or SL DTX of the terminal;
a sidelink interface QoS profile not using SL DRX and/or SL DTX of the terminal;
a sidelink interface QoS profile list not using SL DRX and/or SL DTX of the terminal;
a QoS profile list using SL DRX and/or SL DTX under each sidelink destination of the terminal;
a QoS profile list not using SL DRX and/or SL DTX under each sidelink destination of the terminal.

25. The network side device according to claim 24, wherein the processor is configured to read the program in the memory and perform following operations:
if it is determined, according to the indication information, that the terminal uses SL DRX and/or SL DTX at a sidelink interface, determining an SL DRX configuration and/or an SL DTX configuration corresponding to each QoS profile or each QoS profile list under each destination of the terminal;
determining, according to the SL DRX configuration and the SL DTX configuration, SL DRX activation time and/or SL DTX activation time corresponding to each QoS profile or each QoS profile list under each destination of the terminal;
scheduling a sidelink interface logical channel belonging to each QoS profile or each QoS profile list under each destination according to the SL DRX activation time and/or the SL DTX activation time corresponding to the QoS profile or the QoS profile list.

26. The network side device according to claim 24, wherein the processor is configured to read the program in the memory and perform following operations:
if it is determined, according to the indication information, that at least part of sidelink destinations of the terminal uses SL DRX and/or SL DTX, or it is determined, according to the indication information, that a sidelink destination list uses SL DRX and/or SL DTX of the terminal, determining an SL DRX configuration and/or an SL DTX configuration corresponding to each QoS profile or each QoS profile list using SL DRX and/or SL DTX under each destination of the terminal;
determining, according to the SL DRX configuration and/or the SL DTX configuration, SL DRX activation time and/or SL DTX activation time corresponding to each QoS profile or each QoS profile list under each destination using SL DRX and/or SL DTX of the terminal;
scheduling, according to the SL DRX activation time and/or the SL DTX activation time corresponding to each QoS profile or each QoS profile list under each destination using SL DRX and/or SL DTX of the terminal, a sidelink interface logical channel belonging to the QoS profile or the QoS profile list.

27. The network side device according to claim 24, wherein the processor is configured to read the program in the memory and perform following operations:
if it is determined, according to the indication information, that at least part of QoS profiles or QoS profile lists of the sidelink interface of the terminal uses SL DRX and/or SL DTX, or it is determined, according to the indication information, that a sidelink interface QoS profile or a QoS profile list uses SL DRX and/or SL DTX of the terminal, determining an SL DRX configuration and/or an SL DTX configuration corresponding to each QoS profile or each QoS profile list using SL DRX and/or SL DTX under each destination of the terminal;
determining, according to the SL DRX configuration and/or the SL DTX configuration, SL DRX activation time and/or SL DTX activation time corresponding to each QoS profile or each QoS profile list using SL DRX and/or SL DTX under each destination of the terminal;
scheduling, according to the SL DRX activation time and/or the SL DTX activation time corresponding to each QoS profile or each QoS profile list using SL DRX and/or SL DTX under each destination of the terminal, a sidelink interface logical channel belonging to the QoS profile or the QoS profile list.

28. The network side device according to claim 24, wherein the processor is configured to read the program in the memory and execute following operations:
if it is determined, according to the indication information, that part of QoS profiles or QoS profile lists under at least a part of sidelink destinations of the terminal uses SL DRX and/or SL DTX, or a QoS profile list using SL DRX and/or SL DTX under each sidelink destination of the terminal is determined according to the indication information, determining an SL DRX configuration and/or an SL DTX configuration corresponding to the QoS profile or the QoS profile list under the destination using SL DRX and/or SL DTX of the terminal;
according to the SL DRX configuration and/or the SL DTX configuration, determining SL DRX activation time and/or SL DTX activation time corresponding to the QoS profile or the QoS profile list under the destination using SL DRX and/or SL DTX of the terminal;
scheduling, according to the SL DRX activation time and/or the SL DTX activation time corresponding to the QoS profile or the QoS profile list under the destination using SL DRX and/or SL DTX of the terminal, sidelink interface logical channels belonging to the QoS profile or the QoS profile list.

29. The network side device according to claim 24, wherein the processor is configured to read the program in the memory and perform following operations:
if it is determined, according to the indication information, that SL DRX and/or SL DTX is not applied at the sidelink interface of the terminal, scheduling any sidelink interface logical channel belonging to the terminal by using all available resources of the sidelink interface;
if it is determined, according to the indication information, that SL DRX and/or SL DTX is not applied to at least part of the sidelink destinations of the terminal, or a sidelink destination list not using SL DRX and/or SL DTX is determined for the terminal according to the indication information, scheduling a sidelink interface logical channel under each destination not using SL DRX and/or SL DTX and belonging to the terminal, by using all available resources of the sidelink interface;
if it is determined, according to the indication information, that SL DRX and/or SL DTX is not applied to at least part of QoS profiles or QoS profile lists of the sidelink interface of the terminal, or it is determined, according to the indication information, that SL DRX and/or SL DTX is not applied to part of QoS profiles or QoS profile lists under the at least part of sidelink destinations of the terminal, then scheduling, by using all available resources of the sidelink interface, a sidelink interface bearer belonging to the QoS profile or the QoS profile list under a destination not using SL DRX and/or SL DTX of the terminal;
if a sidelink interface QoS profile not using SL DRX and/or SL DTX is determined according to the indication information, scheduling a sidelink interface logical channel belonging to the QoS profile not using SL DRX and/or SL DTX under each destination of the terminal, by using all available resources of the sidelink interface;
if a sidelink interface QoS profile list that does not use SL DRX and/or SL DTX is determined according to the indication information, or a QoS profile list not using SL DRX and/or SL DTX under each sidelink destination of the terminal is determined according to the indication information, scheduling, by using all available resources of the sidelink interface, a sidelink interface logical channel belonging to a QoS profile list not using SL DRX and/or SL DTX under each destination of the terminal.

30. A resource scheduling apparatus, comprising:
a receiving unit, used to receive indication information from a terminal; and
a scheduling unit, used to perform scheduling of a sidelink interface of the terminal according to the indication information.

31. A processor-readable storage medium, wherein the processor-readable storage medium stores a program, wherein the program is configured to cause a processor to execute steps of the information transmission method according to any one of claims 1-7, or perform steps of the resource scheduling method according to any one of claims 8-14.
